# EUROPEAN PATENT APPLICATION

(11) **EP 3 503 564 A1**
(43) Date of publication of application: **26.06.2019**
(21) Application number: 17843467.6
(22) Date of filing: 17.08.2017
(51) Int. Cl.: H04N 21/2362, H04N 19/31, H04N 19/70, H04N 21/434

(54) **TRANSMISSION APPARATUS, TRANSMISSION METHOD, RECEPTION APPARATUS, AND RECEPTION METHOD**

(30) Priority: 22.08.2016 JP 2016162278
(71) Applicant: Sony Corporation, Tokyo 108-0075 (JP)
(72) Inventor: TSUKAGOSHI, Ikuo, Tokyo 108-0075 (JP)
(74) Representative: 2SPL Patentanwälte PartG mbB
(86) International application number: PCT/JP2017/029498
(87) International publication number: WO 2018/037985

(57) **Abstract**

Transmission of a video stream can be performed satisfactorily.

Hierarchical encoding of image data is performed of each picture constituting moving image data, and a video stream is generated having encoded image data of a picture of each hierarchical layer. A container of a predetermined format is transmitted including the video stream. A descriptor in which values necessary for decoding are described is fixedly inserted into a layer of the container. The values necessary for decoding are fixed to maximum scale values. Operation on the transmission side becomes easy, and on the reception side, the maximum scale values of the values necessary for decoding can be easily recognized by the layer of the container.

## Description

### TECHNICAL FIELD

The present technology relates to a transmission device, a transmission method, a reception device, and a reception method, and in particular relates to a transmission device or the like that continuously transmits video streams of a plurality of programs.

### BACKGROUND ART

In broadcasting, it is conceivable to mix and transmit image formats, for example, a plurality of programs (events) respectively having different frame rates (frame frequencies). For example, sports-related programs are provided by a service of 100P, others are provided by a service of 50P, or the like.

Conventionally, for example, in the High Efficiency Video Coding (HEVC), temporal scalability by performing hierarchical encoding of image data of each picture constituting moving image data has been devised (see Non-Patent Document 1). On the reception side, it is possible to identify a hierarchical layer of each picture on the basis of temporal ID (temporal_id) information inserted into a header of a Network Abstraction Layer (NAL) unit, and selectively decode up to a hierarchical layer corresponding to decoding capability.

### CITATION LIST

### NON-PATENT DOCUMENT

Non-Patent Document 1: Gary J. Sullivan, Jens-Rainer Ohm, Woo-Jin Han, Thomas Wiegand, "Overview of the High Efficiency Video Coding (HEVC) Standard" IEEE TRANSACTIONS ON CIRCUITS AND SYSTEMS FOR VIDEO TECNOROGY, VOL. 22, No. 12, pp. 1649-1668, DECEMBER 2012

### SUMMARY OF THE INVENTION

### PROBLEMS TO BE SOLVED BY THE INVENTION

An object of the present technology is to make it possible to perform transmission of a video stream satisfactorily.

### SOLUTIONS TO PROBLEMS

The concept of the present technology is in a transmission device including:
an image encoding unit that performs hierarchical encoding of image data of each picture constituting moving image data and generates a video stream having encoded image data of a picture of each hierarchical layer; and
a transmission unit that transmits a container of a predetermined format including the video stream, in which
a descriptor in which values necessary for decoding are described is fixedly inserted into a layer of the container, and
the values necessary for decoding are fixed to maximum scale values.

In the present technology, by the image encoding unit, hierarchical encoding of image data is performed of each picture constituting the moving image data, and the video stream is generated having the encoded image data of the picture of each hierarchical layer. For example, the image encoding unit may be made to generate a first video stream by encoding moving image data of a first frame rate, and generate a second video stream by encoding moving image data of a second frame rate higher than the first frame rate, and the transmission unit may be made to transmit the container of the predetermined format continuously including the first video stream and the second video stream generated by the image encoding unit.

In this case, for example, the first video stream may be made to include a base stream having encoded image data of pictures of all the hierarchical layers, and the second video stream may be made to include a base stream having encoded image data of a picture on a low hierarchical layer side, and an enhanced stream having encoded image data of a picture on a high hierarchical layer side. In this case, distribution is performed in a mode having High Frame Rate (HFR) backward compatibility.

At this time, for example, a hierarchical layer of a picture included in the enhanced stream may be set to a fixed hierarchical layer larger than a maximum hierarchical layer that can be taken by a picture of the base stream. Thus, even in a case where a hierarchical structure of each picture of the base stream changes, it is possible to appropriately extract the encoded image data of a picture of each hierarchical layer included in the base stream.

Furthermore, in this case, for example, the first video stream and the second video stream each may be made to include a base stream having encoded image data of pictures of all the hierarchical layers. In this case, distribution is performed in a mode not having High Frame Rate (HFR) backward compatibility.

The descriptor in which the values necessary for decoding are described is fixedly inserted into the layer of the container. Furthermore, the values necessary for decoding are fixed to the maximum scale values. For example, the values necessary for decoding may be made to be a level specification value of the video stream, and maximum and minimum values of hierarchical layers of the encoded image data of each picture included in the video stream.

As described above, according to the present technology, the descriptor in which the values necessary for decoding are described is fixedly inserted into the layer of the container, and the values necessary for decoding are fixed to the maximum scale values, so that operation on the transmission side becomes easy, and on the reception side, the maximum scale values of the values necessary for decoding can be easily recognized by the layer of the container.

Note that, in the present technology, for example, the container may be a transport stream, the descriptor may be an HEVC VIDEO descriptor, and a component descriptor in which frame rate information and compatibility information are described may be inserted into the layer of the container in correspondence with the video stream for each of programs (events). Thus, on the reception side, it is possible to combine description contents of the HEVC VIDEO descriptor and the component descriptor to accurately determine a state of a received video stream and perform appropriate processing.

Furthermore, another concept of the present technology is in a reception device including: a reception unit that receives a container of a predetermined format including a video stream having encoded image data of a picture of each hierarchical layer, the video stream being generated by hierarchical encoding of image data of each picture constituting moving image data, in which
a descriptor in which values necessary for decoding are described is fixedly inserted into a layer of the container,
the values necessary for decoding are fixed to maximum scale values, and
a control unit is further included, the control unit controlling decoding processing of the video stream on the basis of a description content of the descriptor.

In the present technology, by the reception unit, the container is received of the predetermined format including the video stream having the encoded image data of the picture of each hierarchical layer, the video stream being generated by hierarchical encoding of the image data of each picture constituting the moving image data.

The descriptor in which the values necessary for decoding are described is fixedly inserted into the layer of the container. Furthermore, the values necessary for decoding are fixed to the maximum scale values. Decoding processing of the video stream is controlled by the control unit on the basis of the description content of the descriptor.

As described above, according to the present technology, the decoding processing of the video stream is controlled on the basis of the descriptor that is inserted into the layer of the container and in which the values necessary for decoding are described and fixed to the maximum scale values, so that it is possible to appropriately perform the decoding processing of the video stream.

Note that, in the present technology, for example, the container may be made to be a transport stream, the descriptor may be made to be an HEVC VIDEO descriptor, a component descriptor in which frame rate information and compatibility information are described may be made to be inserted into the layer of the container in correspondence with the video stream for each of programs (events), and the control unit may be made to control the decoding processing of the video stream on the basis of a description content of the HEVC VIDEO descriptor and a description content of the component descriptor. Thus, the control unit is enabled to combine the description contents of the HEVC VIDEO descriptor and the component descriptor to accurately determine the state of the received video stream and perform appropriate processing.

### EFFECTS OF THE INVENTION

According to the present technology, transmission of the video stream can be performed satisfactorily. Note that, the effect described here is not necessarily limited, and can be any effect described in the present disclosure.

### BRIEF DESCRIPTION OF DRAWINGS

Fig. 1 is a block diagram illustrating a configuration example of a transmission/reception system as an embodiment.
Fig. 2 is a diagram illustrating an example of hierarchical encoding.
Fig. 3 is a diagram illustrating a structural example of a NAL unit header, and contents of main parameters in the structural example.
Fig. 4 is a diagram illustrating a structural example of an HEVC VIDEO descriptor.
Fig. 5 is a diagram illustrating a structural example of an EIT, and contents of related elements in the structural example.
Fig. 6 is a diagram illustrating a structural example of a component descriptor, and contents of main elements in the structural example.
Fig. 7 is a diagram illustrating a correspondence relationship between each value of "component_type" and a video stream identified by the value.
Fig. 8 is a diagram illustrating a structural example of a stream identifier descriptor.
Fig. 9 is a diagram illustrating an example of a correspondence relationship between description contents of the HEVC VIDEO descriptor and description contents of the component descriptor.
Fig. 10 is a block diagram illustrating a configuration example of a transmission device.
Fig. 11 is a diagram illustrating an example of a state change of a sequence parameter set, the HEVC VIDEO descriptor, and the component descriptor in a case where switching is performed from a 50 Hz program to a 100 Hz program in distribution in a mode having backward compatibility.
Fig. 12 is a diagram illustrating a configuration example of a transport stream TS at the time of transmission of the 50 Hz program in the distribution in the mode having backward compatibility.
Fig. 13 is a diagram illustrating a configuration example of the transport stream TS at the time of transmission of the 100 Hz program in the distribution in the mode having backward compatibility.
Fig. 14 is a diagram illustrating an example of a state change of a conventional sequence parameter set and HEVC VIDEO descriptor.
Fig. 15 is a diagram illustrating an example of the state change of the sequence parameter set, the HEVC VIDEO descriptor, and the component descriptor in a case where switching is performed from the 50 Hz program to the 100 Hz program in distribution in a mode not having backward compatibility.
Fig. 16 is a diagram illustrating a configuration example of the transport stream TS at the time of transmission of the 50 Hz program in distribution in the mode not having backward compatibility.
Fig. 17 is a diagram illustrating a configuration example of the transport stream TS at the time of transmission of the 100 Hz program in distribution in the mode not having backward compatibility.
Fig. 18 is a diagram illustrating an example of the state change of the conventional sequence parameter set and HEVC VIDEO descriptor.
Fig. 19 is a block diagram illustrating a configuration example of a reception device.
Fig. 20 is a diagram illustrating a configuration example of a TS analysis unit.
Fig. 21 is a diagram illustrating an example of an EPG display or the like performed on the basis of user operation in the reception device.

### MODE FOR CARRYING OUT THE INVENTION

The following is a description of a mode for
carrying out the invention (the mode will be hereinafter referred to as the "embodiment"). Note that, description will be made in the following order.
1. Embodiment
2. Modifications

### <1. Embodiment>

### Transmission/reception system

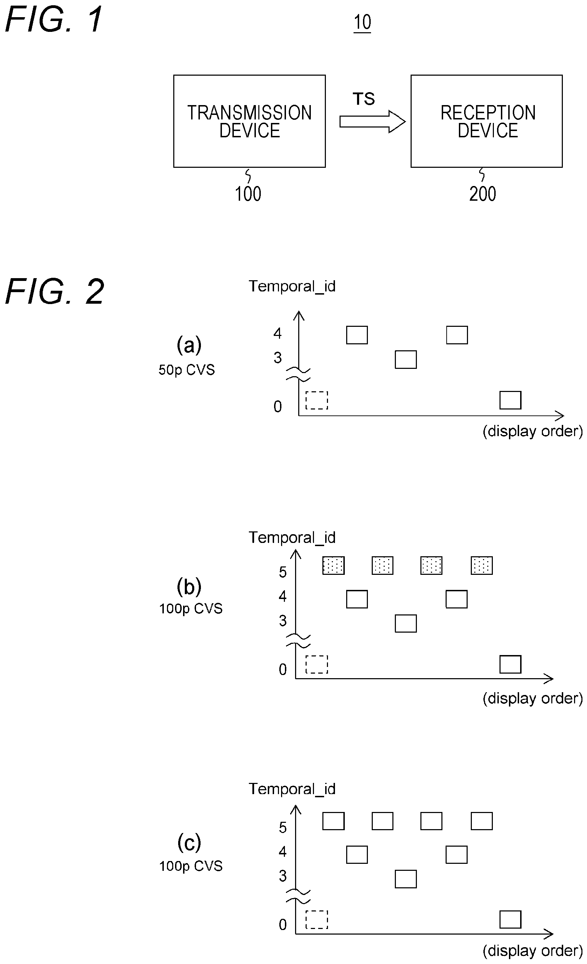

Fig. 1 illustrates a configuration example of a transmission/reception system 10 as an embodiment. The transmission/reception system 10 includes a transmission device 100, and a reception device 200.

The transmission device 100 transmits a transport stream TS as a container (multiplexed stream) loaded on a broadcast wave or a network packet. In the transport stream TS, video streams of a plurality of programs (events) are continuously included. Each of the video streams is generated by hierarchical encoding of image data of each picture constituting moving image data, and has encoded image data of a picture of each hierarchical layer.

The plurality of programs includes a program related to moving image data of a first frame rate (first frame frequency), and a program related to moving image data of a second frame rate (second frame frequency) higher than the first frame rate. For example, the first frame rate is 50 Hz and the second frame rate is 100 Hz, or the first frame rate is 60 Hz and the second frame rate is 120 Hz. Here, as an example, a case will be described where the first frame rate is 50 Hz and the second frame rate is 100 Hz.

In the plurality of programs, depending on services, distribution is performed in a mode having High Frame Rate (HFR) backward compatibility (HFR Backward Compatible Mode), or distribution is performed in a mode not having HFR backward compatibility (HFR Non-Backward Compatible Mode).

With respect to a program related to moving image data of 50 Hz, the moving image data is encoded and a first video stream is generated. On the other hand, with respect to a program related to moving image data of 100 Hz, the moving image data is encoded and a second video stream is generated.

Here, in the distribution in the mode having backward compatibility, the first video stream includes a base stream having encoded image data of the pictures of all the hierarchical layers. Furthermore, in the distribution in the mode having backward compatibility, the second video stream includes a base stream having encoded image data of a picture on a low hierarchical layer side, and an enhanced stream having encoded image data of a picture on a high hierarchical layer side.

In this case, a hierarchical layer of a picture included in the enhanced stream is set to a fixed hierarchical layer larger than a maximum hierarchical layer that can be taken by a picture of the base stream. Thus, even in a case where a hierarchical structure of each picture of the base stream changes, it becomes possible to appropriately extract the encoded image data of a picture of each hierarchical layer included in the base stream.

Furthermore, in the distribution in the mode not having backward compatibility, the first video stream includes the base stream having encoded image data of the pictures of all the hierarchical layers. Furthermore, in the distribution in the mode not having backward compatibility, the second video stream also includes the base stream having encoded image data of the pictures of all the hierarchical layers.

Fig. 2(a) is a diagram illustrating an example of hierarchical encoding of the first video stream (base stream) in the distribution in the mode having backward compatibility, or of the first video stream (base stream) in the distribution in the mode not having backward compatibility. Each of rectangular frames indicates a picture. This example is an example in which the highest hierarchical layer is set to "4". The first video stream (base stream) has encoded image data of the pictures in the hierarchical layers of "0" to "4".

Fig. 2(b) illustrates an example of hierarchical encoding of the second video stream (base stream, enhanced stream) in the distribution in the mode having backward compatibility. Each of rectangular frames indicates a picture. This example is an example in which the highest hierarchical layer is set to "5". The base stream has encoded image data of the pictures in the hierarchical layers of "0" to "4". The enhanced stream has encoded image data of the pictures in the hierarchical layer of "5".

Fig. 2(c) illustrates an example of hierarchical encoding of the second video stream (base stream) in the distribution in the mode not having backward compatibility. Each of rectangular frames indicates a picture. This example is an example in which the highest hierarchical layer is set to "5". The second video stream (base stream) has encoded image data of the pictures in the hierarchical layer of "0" to "5".

Note that, in the hierarchical encoding, for example, encoding such as H.264/AVC, H.265/HEVC, or the like is performed, and the encoding is performed such that a picture to be referenced belongs to its own hierarchical layer and/or a hierarchical layer lower than its own hierarchical layer. For the encoded image data of a picture of each hierarchical layer, for each picture, hierarchical layer identification information (temporal_id) is added for identifying a belonging hierarchical layer. In the header portion of a NAL unit (nal_unit) of each picture, "nuh_temporal_id_plus1") is arranged meaning hierarchical layer identification information (temporal_id). By adding the hierarchical layer identification information as described above, it is possible to know the belonging hierarchical layer of each picture on the reception side.

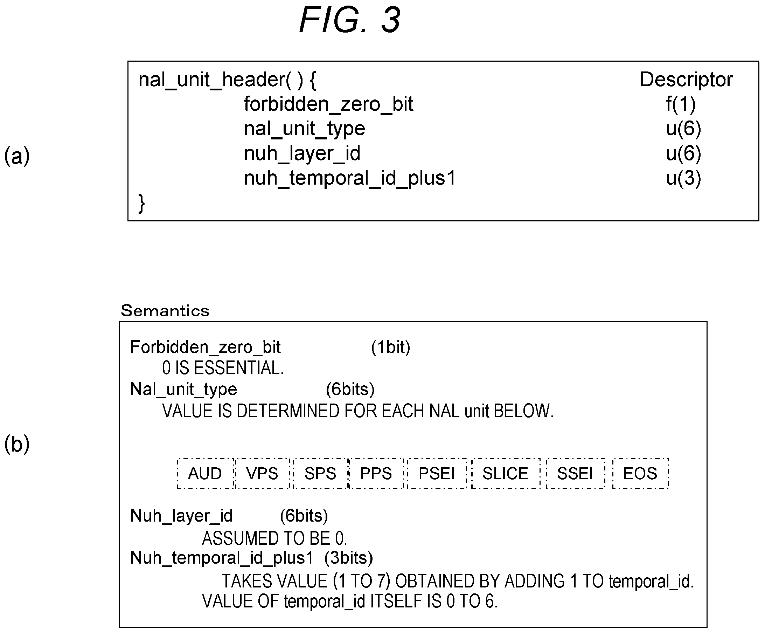

Fig. 3(a) illustrates a structural example (Syntax) of a NAL unit header, and Fig. 3(b) illustrates contents (Semantics) of main parameters in the structure example. For a 1-bit field of "forbidden_zero_bit", 0 is essential. A 6-bit field of "nal_unit_type" indicates a NAL unit type. A 6-bit field of "nuh_layer_id" is assumed to be 0. A 3-bit field of the "nuh_temporal_id_plus1" indicates "temporal_id" and takes a value (1 to 7) obtained by adding 1.

A descriptor in which values necessary for decoding are described, in this case an HEVC VIDEO descriptor as a PMT descriptor, is fixedly inserted into a layer of the container. Furthermore, the values necessary for decoding described in the HEVC VIDEO descriptor are fixed to maximum scale values. The values necessary for decoding are, for example, a level specification value of the video stream, maximum and minimum values of hierarchical layers of the encoded image data of each picture included in the video stream, and the like.

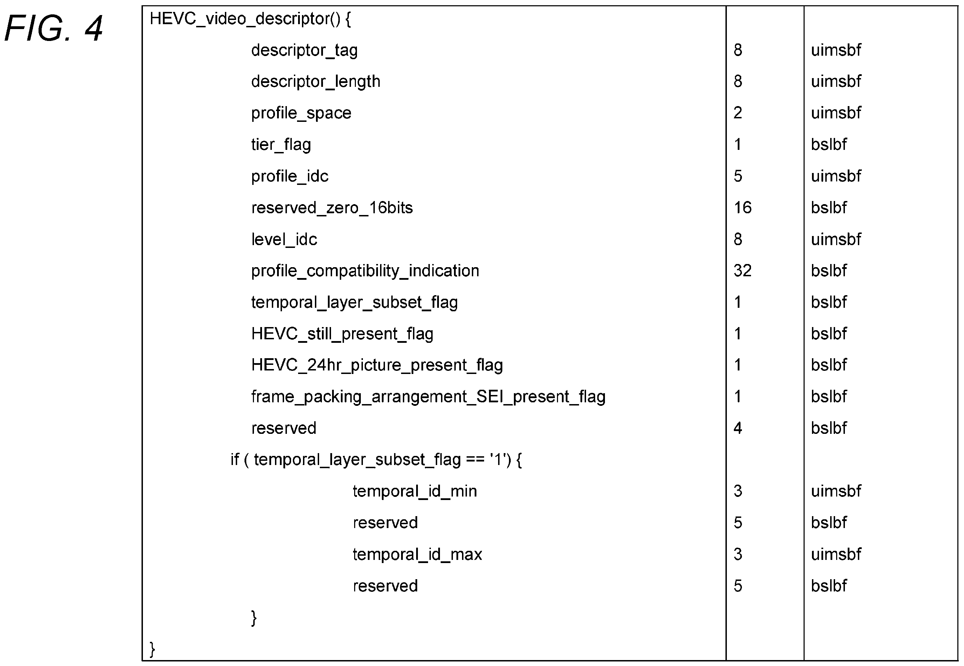

Fig. 4 illustrates a structural example (Syntax) of the HEVC VIDEO descriptor (HEVC_video_descriptor). An 8-bit field of "descriptor_tag" indicates a descriptor type, and here, indicates that it is the HEVC VIDEO descriptor. An 8-bit field of a "descriptor_length" indicates a length (size) of the descriptor, and indicates the number of subsequent bytes as the length of the descriptor.

An 8-bit field of "level_idc" indicates the level specification value of the video stream. Furthermore, when "temporal_layer_subset_flag = 1", there are a 5-bit field of "temporal_id_min" and a 5-bit field of "temporal_id_max". The "temporal_id_min" indicates a value of the "temporal_id" in the lowest hierarchical layer of the hierarchical encoded data included in the corresponding video stream. The "temporal_id_max" indicates a value of the "temporal_id" in the highest hierarchical layer of the hierarchical encoded data included in the corresponding video stream.

Furthermore, a component descriptor (Component_descriptor) in which frame rate information and compatibility information are described is inserted into the layer of the container in correspondence with the video stream for each of the programs (events). The component descriptor is arranged in an Event Information Table (EIT).

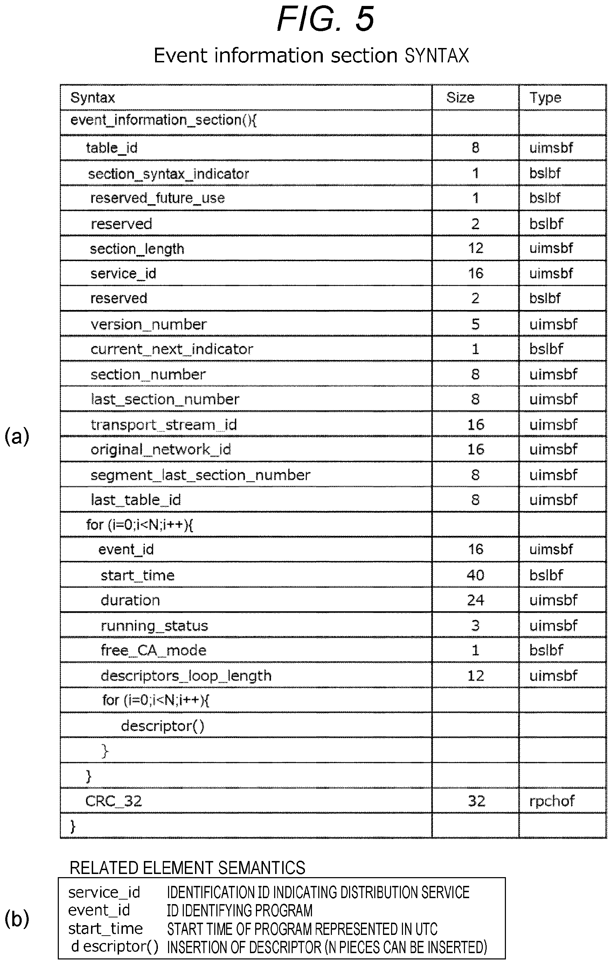

Fig. 5(a) illustrates a structural example (Syntax) of the EIT. Fig. 5(b) illustrates contents (Semantics) of related elements in the structural example of the EIT. A 16-bit field of "service_id" is an identification ID indicating a distribution service. A 16-bit field of "event_id" indicates an ID for identifying a program (event). A 40-bit field of "start_time" indicates a start time of the program and is represented in UTCUniversal Time, Coordinated). A descriptor is inserted into a field of "descriptor ()". It is possible to insert N descriptors.

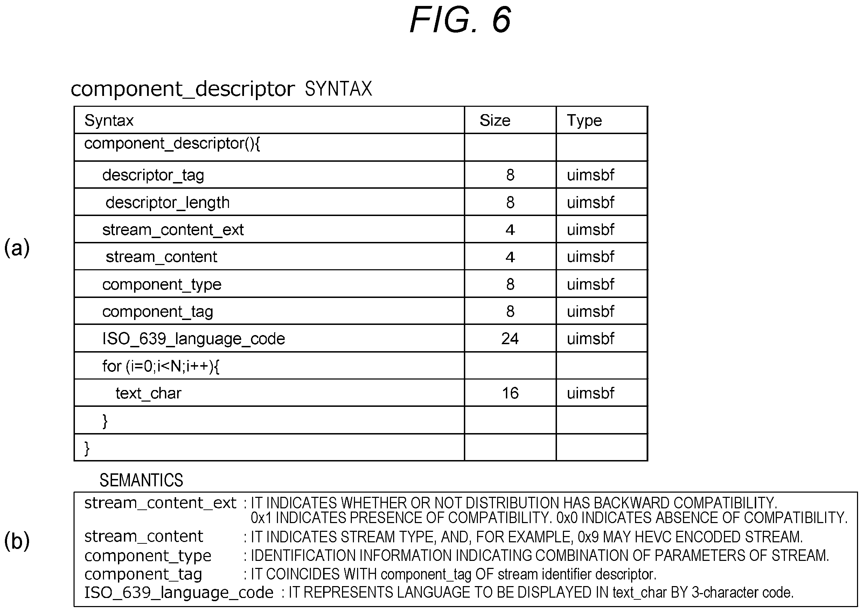

Fig. 6(a) illustrates a structural example (Syntax) of the component descriptor. Fig. 6(b) illustrates contents (Semantics) of main elements in the structural example of the component descriptor. A 4-bit field of "stream_content_ext" indicates whether or not the distribution has backward compatibility. A value "0x1" indicates presence of compatibility, and a value "0x0" indicates absence of compatibility.

A 4-bit field of "stream_content" indicates a type of the stream. For example, a value "0x9" may be an HEVC encoded stream. An 8-bit field of "component_type" is identification information indicating a combination of parameters of the stream.

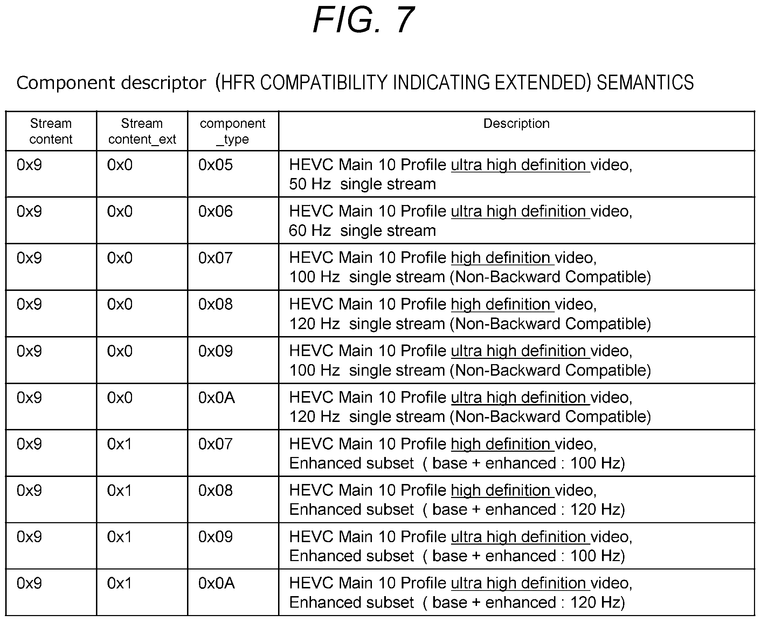

Fig. 7 illustrates a correspondence relationship between each value of the "component_type" and a video stream identified by the value. When "stream_content_ext = 0x0" and "component_type = 0x05", it indicates that the video stream is an HEVC main 10 profile Ultra High Definition (UHD) video and is a single stream (base stream) of 50 Hz. Furthermore, when "stream_content_ext = 0x0" and "component_type = 0x06", it indicates that the video stream is an HEVC main 10 profile UHD video and is a single stream (base stream) of 60 Hz.

Furthermore, when "stream_content_ext = 0x0" and "component_type = 0x07", it indicates that the video stream is an HEVC main 10 profile High Definition (HD) video and is a single stream (base stream) of 100 Hz. Furthermore, when "stream_content_ext = 0x0" and "component_type = 0x08", it indicates that the video stream is an HEVC main 10 profile High Definition (HD) video and is a single stream (base stream) of 120 Hz.

Furthermore, when "stream_content_ext = 0x0" and "component_type = 0x09", it indicates that the video stream is an HEVC main 10 profile UHD video and is a single stream (base stream) of 100 Hz. Furthermore, when "stream_content_ext = 0x0" and "component_type = 0x0A", it indicates that the video stream is an HEVC main 10 profile UHD video and is a single stream (base stream) of 120 Hz.

Furthermore, when "stream_content_ext = 0x1" and "component_type = 0x07", it indicates that the video stream is an HEVC main 10 profile HD video and is an enhanced stream for 100 Hz in combination with a base stream. Furthermore, when "stream_content_ext = 0x1" and "component_type = 0x08", it indicates that the video stream is an HEVC main 10 profile HD video and is an enhanced stream for 120 Hz in combination with a base stream.

Furthermore, when "stream_content_ext = 0x1" and "component_type = 0x09", it indicates that the video stream is an HEVC main 10 profile UHD video and is an enhanced stream for 100 Hz in combination with a base stream. Furthermore, when "stream_content_ext = 0x1" and "component_type = 0x0A", it indicates that the video stream is an HEVC main 10 profile UHD video and is an enhanced stream for 120 Hz in combination with a base stream.

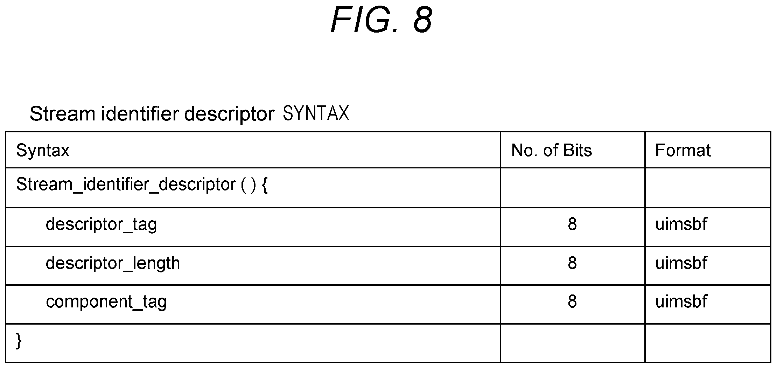

Referring back to Fig. 6, an 8-bit field of "component_tag" indicates a component tag (component_tag), and coincides with a component tag (component_tag) of a stream identifier descriptor (Stream_identifier_descriptor) arranged with the corresponding HEVC VIDEO descriptor. Thus, association between the PMT and the EIT, that is, association between the HEVC VIDEO descriptor and the component descriptor is made. Fig. 8 illustrates a structural example (Syntax) of the stream identifier descriptor. A 24-bit field of "ISO_639_language_code" represents a language to be displayed in a field of "text_char" by "3-character code".

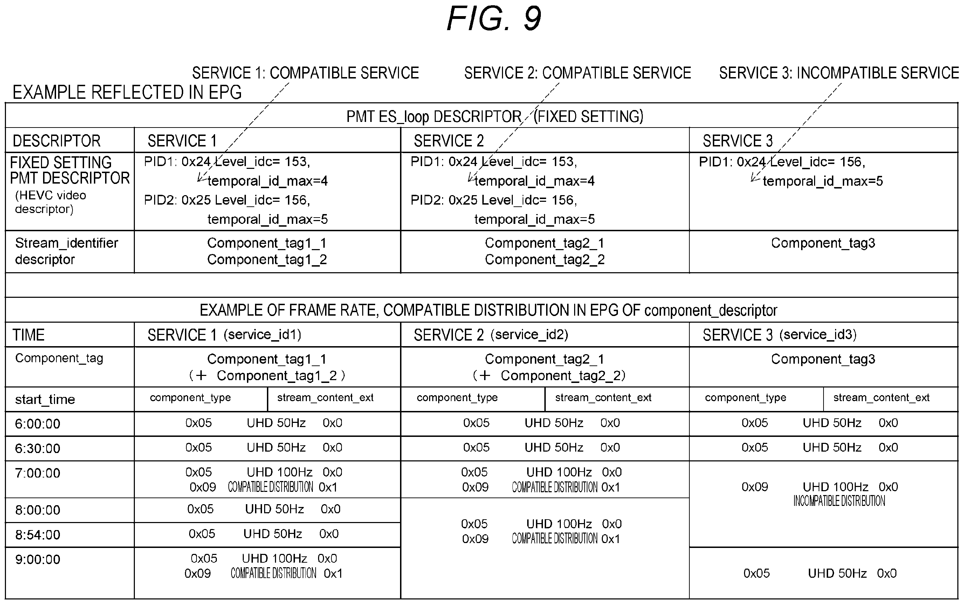

Fig. 9 illustrates an example of a correspondence relationship between description contents of the HEVC VIDEO descriptor and description contents of the component descriptor. "Service 1" is a distribution example in the mode having backward compatibility. In the "service 1", in the PMT, the HEVC VIDEO descriptor is fixedly inserted into ES loops respectively corresponding to the base stream and the enhanced stream, and the values necessary for decoding described in each HEVC VIDEO descriptor (level specification value of the bit rate, maximum value of the hierarchical layers, and the like) are fixed to the maximum scale values.

In the ES loop corresponding to the base stream, information is arranged, such as a stream type and a packet identifier (PID), in correspondence with the base stream. A value of "Stream_type" is set to "0x24", and the PID information is set to "PID1" given to a PES packet of the base stream.

Furthermore, the HEVC VIDEO descriptor and the stream identifier descriptor are inserted into the ES loop corresponding to the base stream. In the HEVC VIDEO descriptor, the "level_idc" is set to "153", that is, "level 5.1". Furthermore, the "temporal_id_max" is set to "4" (see Figs. 2(a) and 2(b)).

Furthermore, in the ES loop corresponding to the enhanced stream, information is arranged, such as a stream type, a packet identifier (PID), in correspondence with the enhanced stream. A value of the "Stream_type" is set to "0x25", and the PID information is set to "PID2" given to a PES packet of the enhanced stream.

Furthermore, the HEVC VIDEO descriptor and the stream identifier descriptor are inserted into the ES loop corresponding to the enhanced stream. In the HEVC VIDEO descriptor, the "level_idc" is set to "156", that is, "level 5.2". Furthermore, the "temporal_id_max" is set to "5" (see Fig. 2(b)).

Furthermore, the component tag in the stream identifier descriptor is set to "Component_tag1", and the HEVC VIDEO descriptor and the component descriptor are associated with each other. Electronic program guide (EPG) information includes the description contents of the component descriptor.

The EPG information also includes the frame rate information and the compatibility information in correspondence with the video stream for each of the events. For example, with respect to a program (event) whose start time (start_time) is "6:00:00", existence of one video stream is indicated. Then, in the one video stream, "stream_content_ext = 0x0" and "component_type = 0x05", so that it can be seen that the video stream is an HEVC main 10 profile Ultra High Definition (UHD) video and is a single stream (base stream) of 50 Hz.

Furthermore, for example, with respect to a program (event) whose start time (start_time) is "7:00:00", it is indicated that two video streams exist and compatible distribution of UHD 100 Hz is performed. Then, in one video stream, elements indicated by "Component_tag1_1" are "stream_content_ext = 0x0" and "component_type = 0x05", so that it can be seen that the video stream is an HEVC main 10 profile Ultra High Definition (UHD) video and is a base stream of 50 Hz. Furthermore, in the other video stream, elements indicated by "Component_tag1_2" are "stream_content_ext = 0×1" and "component_type = 0×09", so that it can be seen that the video stream is an HEVC main 10 profile UHD video and is an enhanced stream for 100 Hz in combination with a base stream.

"Service 2" is also a distribution example in the mode having backward compatibility. Since it is similar to the case of the "service 1" described above, a detailed description thereof will be omitted.

"Service 3" is a distribution example in the mode not having backward compatibility. In the "service 3", in the PMT, the HEVC VIDEO descriptor is fixedly inserted into the ES loop corresponding to the base stream, and the values necessary for decoding described in the HEVC VIDEO descriptor (level specification value of the bit rate, maximum value of the hierarchical layers, and the like) are fixed to the maximum scale values.

In the ES loop corresponding to the base stream, information is arranged, such as a stream type and a packet identifier (PID), in correspondence with the base stream. A value of "Stream_type" is set to "0x24", and the PID information is set to "PID1" given to a PES packet of the base stream.

Furthermore, the HEVC VIDEO descriptor and the stream identifier descriptor are inserted into the ES loop corresponding to the base stream. In the HEVC VIDEO descriptor, the "level_idc" is set to "156", that is, "level 5.2". Furthermore, the "temporal_id_max" is set to "5" (see Fig. 2(c)). Even when the level specification value of the video stream is "level 5.1", "level 5.2" is indicated in the HEVC VIDEO descriptor. An incompatible service is assumed in a case where a lOOp broadcast is performed in one stream originally, so that a reception device that can only receive a 50p broadcast cannot be subject to the "service 3".

Furthermore, the component tag in the stream identifier descriptor is set to "Component_tag3", and the HEVC VIDEO descriptor and the component descriptor are associated with each other. Electronic program guide (EPG) information includes the description contents of the component descriptor.

The EPG information also includes the frame rate information and the compatibility information in correspondence with the video stream for each of the events. For example, with respect to a program (event) whose start time (start_time) is "6:00:00", existence of one video stream is indicated. Then, in the one video stream, the elements indicated by the "Component_tag3" are "stream_content_ext = 0x0" and "component_type = 0x05", so that it can be seen that the video stream is an HEVC main 10 profile Ultra High Definition (UHD) video and is a single stream (base stream) of 50 Hz.

Furthermore, for example, with respect to a program (event) whose start time (start_time) is "7:00:00", it is indicated that one video stream exists and incompatible distribution of UHD 100 Hz is performed. Then, in the video stream, elements indicated by the "Component_tag3" are "stream_content_ext = 0x0" and "component_type = 0x09", so that it can be seen that the video stream is an HEVC main 10 profile UHD video and is a single stream (base stream) of 100 Hz.

Referring back to Fig. 1, the reception device 200 receives the above-described transport stream TS loaded on the broadcast wave or the network packet and transmitted from the transmission device 100. As described above, in the transport stream TS, video streams of the plurality of programs (events) are continuously included. Here, the plurality of programs includes the program related to the moving image data of 50 Hz and the program related to the moving image data of 100 Hz.

Then, in the distribution in the mode having backward compatibility, with respect to the program related to the moving image data of 50 Hz, there is only the base stream having the encoded image data of the pictures of all the hierarchical layers, and with respect to the program related to the moving image data of 100 Hz, there are the base stream having the encoded image data of the picture on the low hierarchical layer side and the enhanced stream having the encoded image data of the picture on the high hierarchical layer side.

On the other hand, in the distribution in the mode not having backward compatibility, with respect to the program related to the moving image data of 50 Hz, there is only the base stream having the encoded image data of the pictures of all the hierarchical layers, and also with respect to the program related to the moving image data of 100 Hz, there is only the base stream having the encoded image data of the pictures of all the hierarchical layers.

The HEVC VIDEO descriptor as the PMT descriptor is fixedly inserted into the layer of the container, and the values necessary for decoding described in the HEVC VIDEO descriptor are fixed to the maximum scale values (see Fig. 9) .

Furthermore, the component descriptor in which the frame rate information and the compatibility information are described is inserted into the layer of the container in correspondence with the video stream for each of the programs (events), and association between the HEVC VIDEO descriptor and the component descriptor is made by the component tag (see Fig. 9).

The reception device 200 controls decoding processing of the video stream on the basis of the description content of the HEVC VIDEO descriptor, or the description content of the HEVC VIDEO descriptor and the description content of the component descriptor, and displays the image of each of the programs.

For example, in the case of a program (event) in which there is only the single stream (base stream) of 50 Hz in the distribution in the mode having backward compatibility (see services 1 and 2 in Fig. 9), in both the reception device 200 that can only receive the 50p broadcast and the reception device 200 that can also receive the lOOp broadcast, the decoding processing of the base stream is performed and the image of the program is displayed.

Furthermore, for example, in a case where there are two video streams of the single stream (base stream) of 50 Hz and the enhanced stream for 100 Hz in combination with the base stream in the distribution in the mode having backward compatibility (see services 1 and 2 in Fig. 9), the reception device 200 that can only receive the 50p broadcast performs the decoding processing of the base stream and displays the image of the program, and the reception device 200 that can also receive the lOOp broadcast performs the decoding processing of both the base stream and the enhanced stream and displays the image of the program.

Furthermore, for example, in the case of a program (event in which there is the single stream (base stream) of 50 Hz or 100 Hz in the distribution in the mode not having backward compatibility (see service 3 in Fig. 9), the reception device 200 that can only receive the 50p broadcast does not perform the encoding processing and does not display the image of the base stream, but the reception device 200 that can also receive the lOOp broadcast performs the decoding processing of the base stream and displays the image of the program.

### "Configuration of Transmission Device"

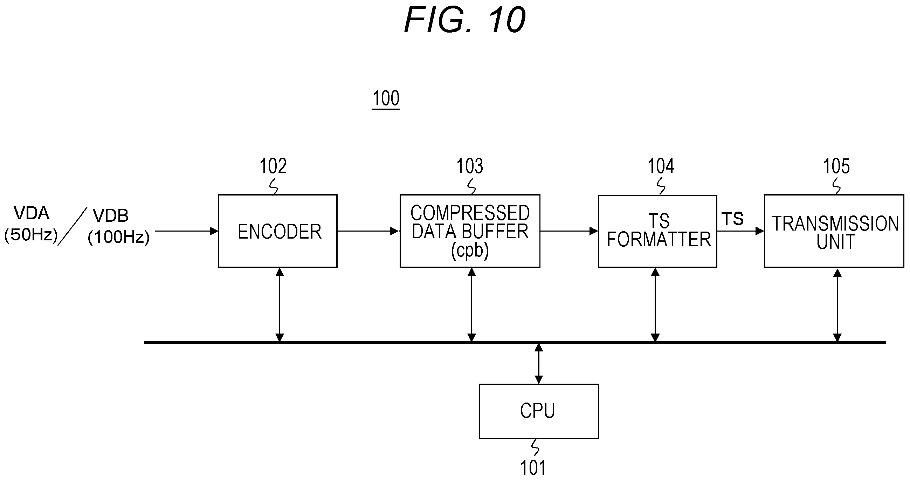

Fig. 10 illustrates a configuration example of the transmission device 100. The transmission device 100 includes a central processing unit (CPU) 101, an encoder 102, a compressed data buffer (coded picture buffer (cpb)) 103, a TS formatter (multiplexer) 104, and a transmission unit 105. The CPU 101 is a control unit, and controls operation of each unit of the transmission device 100.

The encoder 102 selectively input moving image data VDA of a program with a frame rate of 50 Hz (hereinafter referred to as "50 Hz program" as appropriate) and moving image data VDB of a program with a frame rate of 100 Hz (hereinafter referred to as "100 Hz program" as appropriate), and performs encoding of, for example, H.264/AVC, H.265/HEVC, or the like to generate a video stream. In this case, the video stream is generated by hierarchical encoding of image data of each picture constituting the moving image data.

In a case where distribution is performed in the mode having HFR backward compatibility (HFR Backward Compatible Mode), with respect to the moving image data VDA of the 50 Hz program, the base stream having the encoded image data of the pictures of all the hierarchical layers is generated (see Fig. 2(a)). Furthermore, in this case, with respect to the moving image data VDB of the 100 Hz program, the base stream having the encoded image data of the picture on the low hierarchical layer side, and the enhanced stream having the encoded image data of the picture on the high hierarchical layer side are generated (see Fig. 2(b)).

Furthermore, in a case where distribution is performed in the mode not having HFR backward compatibility (HFR Non-Backward Compatible Mode), with respect to the moving image data VDA of the 50 Hz program, the base stream having the encoded image data of the pictures of all the hierarchical layers is generated (see Fig. 2(a)). Furthermore, in this case, also with respect to the moving image data VDB of the 100 Hz program, the base stream having the encoded image data of the pictures of all the hierarchical layers is generated (see Fig. 2(c)).

The compressed data buffer (cpb) 103 temporarily stores the video stream generated by the encoder 103. The TS formatter 104 reads the video stream stored in the compressed data buffer 103, converts the video stream into a PES packet, further converts and multiplexes the PES packet into a transport packet, and obtains a transport stream TS as a multiplexed stream.

In the transport stream TS, the video stream of the 50 Hz program and the video stream of the 100 Hz program are continuously included. In the distribution in the mode having backward compatibility, only the base stream exists as the video stream of the 50 Hz program, and the base stream and the enhanced stream exist as the video stream of the 100 Hz program. Furthermore, in the distribution in the mode not having backward compatibility, only the base streams exist respectively as the video stream of the 50 Hz program and the 100 Hz program.

Furthermore, the TS formatter 104 fixedly inserts the HEVC VIDEO descriptor as the PMT descriptor in the layer of the container, and fixes the values necessary for decoding described in the HEVC VIDEO descriptor to the maximum scale values.

In the distribution in the mode having backward compatibility, in the PMT, the HEVC VIDEO descriptor is fixedly inserted into the ES loops respectively corresponding to the base stream and the enhanced stream. Then, in the HEVC VIDEO descriptor inserted into the ES loop corresponding to the base stream, the "level_idc" is set to "153" and the "temporal_id_max" is set to "4", and in the HEVC VIDEO descriptor inserted into the ES loop corresponding to the enhanced stream, the "level_idc" is set to "156" and the "temporal_id_max" is set to "5" (see services 1 and 2 in Fig. 9).

On the other hand, in the distribution in the mode not having backward compatibility, in the PMT, the HEVC VIDEO descriptor is fixedly inserted into the ES loop corresponding to the base stream. Then, in the HEVC VIDEO descriptor, the "level_idc" is set to "156" and the "temporal_id_max" is set to "5" (see service 3 in Fig. 9).

Furthermore, the TS formatter 104 gives a fixed PID (= PID_1) to the base stream. Furthermore, the TS formatter 104 gives a fixed PID (= PID_2) to the enhanced stream.

Furthermore, the TS formatter 104 inserts the component descriptor in which the frame rate information and the compatibility information are described into the layer of the container in correspondence with the video stream for each of the programs (events) and makes association between the HEVC VIDEO descriptor and the component descriptor by the component tag (see Fig. 9). The component descriptor is arranged in the EIT.

The transmission unit 105 loads the transport stream TS obtained by the TS formatter 104 on the broadcast wave or the network packet, and transmits the transport stream TS to the reception device 200.

Operation of the transmission device 100 illustrated in Fig. 10 will be briefly described. The moving image data VDA of the 50 Hz program and the moving image data VDB of the 100 Hz program are selectively input to the encoder 102. In the encoder 102, the input moving image data is subjected to hierarchical encoding, and a video stream is generated. The video stream is temporarily stored in the compressed data buffer (cpb) 103.

Here, in a case where the distribution is performed in the mode having HFR backward compatibility, with respect to the moving image data VDA of the 50 Hz program, the base stream having the encoded image data of the pictures of all the hierarchical layers is generated (see Fig. 2(a)). Furthermore, in this case, with respect to the moving image data VDB of the 100 Hz program, the base stream having the encoded image data of the picture on the low hierarchical layer side, and the enhanced stream having the encoded image data of the picture on the high hierarchical layer side are generated (see Fig. 2(b)).

Furthermore, in a case where the distribution is performed in the mode not having HFR backward compatibility, with respect to the moving image data VDA of the 50 Hz program, the base stream having the encoded image data of the pictures of all the hierarchical layers is generated (see Fig. 2(a)). Furthermore, in this case, also with respect to the moving image data VDB of the 100 Hz program, the base stream having the encoded image data of the pictures of all the hierarchical layers is generated (see Fig. 2(c)).

In the TS formatter 104, the video stream stored in the compressed data buffer 103 is read, converted into the PES packet, further converted and multiplexed into the transport packet, and the transport stream TS is obtained as the multiplexed stream.

In the transport stream TS, the video stream of the 50 Hz program and the video stream of the 100 Hz program are continuously included. In the distribution in the mode having backward compatibility, only the base stream is included as the video stream of the 50 Hz program, and the base stream and the enhanced stream are included as the video stream of the 100 Hz program. Furthermore, in the distribution in the mode not having backward compatibility, only the base streams are included respectively as the video stream of the 50 Hz program and the 100 Hz program.

Furthermore, in the TS formatter 104, the HEVC VIDEO descriptor as the PMT descriptor is fixedly inserted into the layer of the container, and the values necessary for decoding described in the HEVC VIDEO descriptor are fixed to the maximum scale values. In this case, in the distribution in the mode having backward compatibility, in the PMT, the HEVC VIDEO descriptor is fixedly inserted into the ES loops respectively corresponding to the base stream and the enhanced stream. On the other hand, in the distribution in the mode not having backward compatibility, in the PMT, the HEVC VIDEO descriptor is fixedly inserted into the ES loop corresponding to the base stream.

Furthermore, in the TS formatter 104, the fixed PID (= PID_1) is given to the base stream, and the fixed PID (= PID_2) is given to the enhanced stream.

Furthermore, in the TS formatter 104, the component descriptor in which the frame rate information and the compatibility information are described is inserted into the layer of the container in correspondence with the video stream for each of the programs (events), and association between the HEVC VIDEO descriptor and the component descriptor is made by the component tag.

The transport stream TS obtained by the TS formatter 104 is sent to the transmission unit 105. In the transmission unit 105, the transport stream TS obtained by the TS formatter 104 is loaded on the broadcast wave or the network packet and transmitted to the reception device 200.

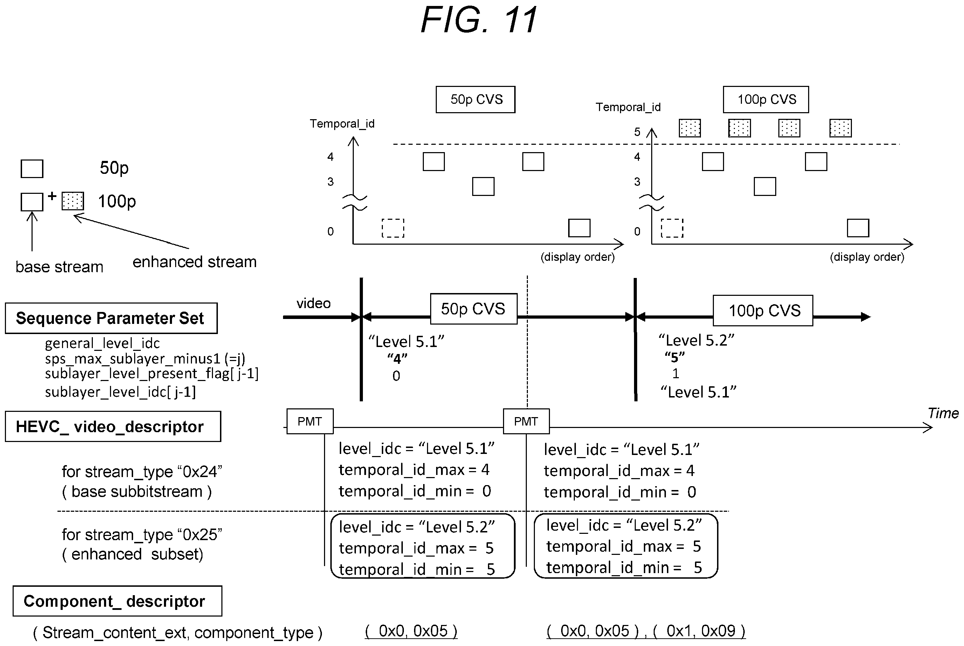

Fig. 11 illustrates an example of a state change of a sequence parameter set (Sequence Parameter Set (SPS)), the HEVC VIDEO descriptor (HEVC_video_descriptor), and the component descriptor (Component_descriptor) in a case where switching is performed from the 50 Hz program to the 100 Hz program in the distribution in the mode having backward compatibility.

As the video stream of the 50 Hz program, only the base stream exists. The base stream includes the encoded image data of the pictures of all the hierarchical layers from 0 to 4. In this case, in the SPS of the base stream, "general_level_idc" is set to "level 5.1" and "sps_max_sublayer_minus1" is set to "4".

As the video stream of the 100 Hz program, the base stream and the enhanced stream exist. The base stream includes the encoded image data of the pictures of the hierarchical layers of 0 to 4, and the enhanced stream includes the encoded image data of the picture of the hierarchical layer of 5. In this case, in the SPS of the base stream, the "general_level_idc" is set to "level 5.2" and the "sps_max_sublayer_minus1" is set to "5".

At a timing just before a transmission period of the 50 Hz program is started, the PMT corresponding to the 50 Hz program is inserted into the layer of the container. Here, only the base stream exists as the video stream of the 50 Hz program, but the HEVC VIDEO descriptor corresponding to the base stream and the HEVC VIDEO descriptor corresponding to the enhanced stream are inserted into the PMT. This is because in the present technology, the PMT descriptor is fixedly inserted.

In this case, in the HEVC VIDEO descriptor corresponding to the base stream, the "level_idc" is set to "level 5.1", and moreover, the "temporal_id_min" is set to "0", and the "temporal_id_max" is set to "4". Furthermore, in the HEVC VIDEO descriptor corresponding to the enhanced stream, the "level_idc" is set to "level 5.2", and moreover, the "temporal_id_min" is set to "5", and the "temporal_id_max" is set to "5".

There is a component descriptor associated with the HEVC VIDEO descriptor corresponding to the base stream. In the component descriptor, the "stream_content_ext" is set to "0x0" and the "component_type" is set to "0x05", and existence is indicated of the single stream (base stream) of 50 Hz.

Similarly, in the transmission period of the 50 Hz program, at a timing just before the transmission period of the 100 Hz program is started, the PMT corresponding to the 100 Hz program is inserted into the layer of the container. Here, the base stream and the enhanced stream exist as the video stream of the 100 Hz program, and the HEVC VIDEO descriptor corresponding to the base stream and the HEVC VIDEO descriptor corresponding to the enhanced stream are inserted into the PMT.

In this case, the description content of each HEVC VIDEO descriptor is the same as the description content of each HEVC VIDEO descriptor in the PMT corresponding to the 50 Hz program. In other words, in the HEVC VIDEO descriptor corresponding to the base stream, the "level_idc" is set to "level 5.1", and moreover, the "temporal_id_min" is set to "0", and the "temporal_id_max" is set to "4". Furthermore, in the HEVC VIDEO descriptor corresponding to the enhanced stream, the "level_idc" is set to "level 5.2", and moreover, the "temporal_id_min" is set to "5", and the "temporal_id_max" is set to "5".

There is a first component descriptor associated with the HEVC VIDEO descriptor corresponding to the base stream and a second component descriptor associated with the HEVC VIDEO descriptor corresponding to the enhanced stream. In the first component descriptor, the "stream_content_ext" is set to "0x0" and the "component_type" is set to "0x05", and existence is indicated of the single stream (base stream) of 50 Hz. Furthermore, in the second component descriptor, the "stream_content_ext" is set to "0x1" and the "component_type" is set to "0x09", and existence is indicated of the enhanced stream for 100 Hz in combination with the base stream.

As described above, in the present technology, the PMT descriptor (HEVC VIDEO descriptor) is fixedly inserted into the layer of the container. That is, the PMT descriptor corresponding to the 50 Hz program and the PMT descriptor corresponding to the 100 Hz program are set to be exactly the same state. Then, the values necessary for decoding described in the PMT descriptor are fixed to the maximum scale values.

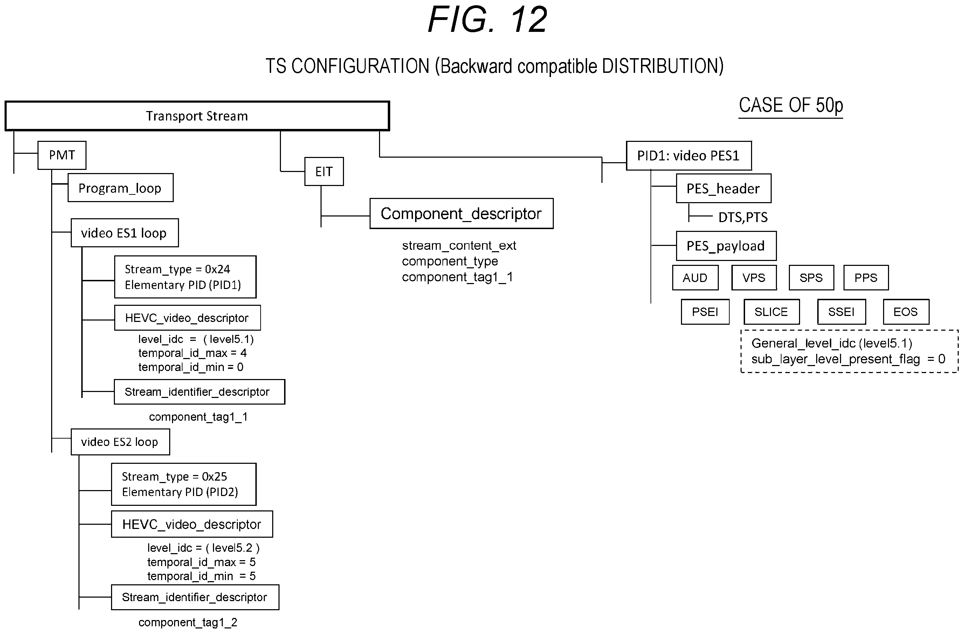

Fig. 12 illustrates a configuration example of the transport stream TS at the time of transmission of the 50 Hz program. In the configuration example, there is a base stream PES packet "video PES1" identified by PID1. Here, PID1 is a fixed PID in the base stream.

In the encoded image data of each picture of the base stream, NAL units exist such as the AUD, VPS, SPS, PPS, SLICE, and SEI. As described above, in the header of the NAL unit, the "nuh_temporal_id_plus1" is arranged meaning hierarchical layer identification information (temporal_id) of the picture. Into the SPS, "general_level_idc" is inserted that is the level specification value of the video stream. Here, the "general_level_idc" is set to "level 5.1".

Furthermore, the transport stream TS includes the Program Map Table (PMT) as Program Specific Information (PSI). The PSI is information indicating a program to which each elementary stream included in the transport stream belongs. In the PMT, a program loop (Program loop) exists describing information related to the entire program. Furthermore, in the PMT, an ES loop exists having information related to each elementary stream. In this configuration example, there are a video ES loop (video ES1 loop) corresponding to a base stream (video PES1) actually existing and a video ES loop (video ES2 loop) corresponding to an enhanced stream (video PES2) not actually existing.

In the video ES loop (video ES1 loop), information is arranged, such as a stream type and a packet identifier (PID), in correspondence with the base stream (video PES1), and a descriptor is also arranged describing information related to the video stream. A value of the "Stream_type" of the base stream is set to "0x24," and the PID information indicates PID1 given to the base stream PES packet "video PES1" as described above.

Furthermore, the HEVC VIDEO descriptor (HEVC descriptor) and the stream identifier descriptor (Stream_identifier_descriptor) are inserted into the video ES loop (video ES1 loop). In the HEVC VIDEO descriptor, the "level_idc" is set to "level 5.1". Furthermore, the "temporal_id_min" is set to "0" and the "temporal_id_max" is set to "4". The stream identifier descriptor associates the HEVC VIDEO descriptor and the component descriptor (component_descriptor) under the EIT with each other by the component tag "Component_tag1".

In the video ES loop (video ES2 loop), information is arranged, such as a stream type and a packet identifier (PID), in correspondence with the enhanced stream (video PES2), and a descriptor is also arranged describing information related to the video stream. A value of the "Stream_type" of the enhanced stream is set to "0x25," and the PID information indicates PID2 given to the enhanced stream PES packet "video PES2" as described above.

Furthermore, the HEVC VIDEO descriptor (HEVC descriptor) and the stream identifier descriptor (Stream_identifier_descriptor) are inserted into the video ES loop (video ES2 loop). In the HEVC VIDEO descriptor, the "level_idc" is set to "level 5.2". Furthermore, the "temporal_id_min" is set to "5", and the "temporal_id_max" is set to "5". The stream identifier descriptor associates the HEVC VIDEO descriptor and the component descriptor (component_descriptor) under the EIT with each other by the component tag "Component_tag2".

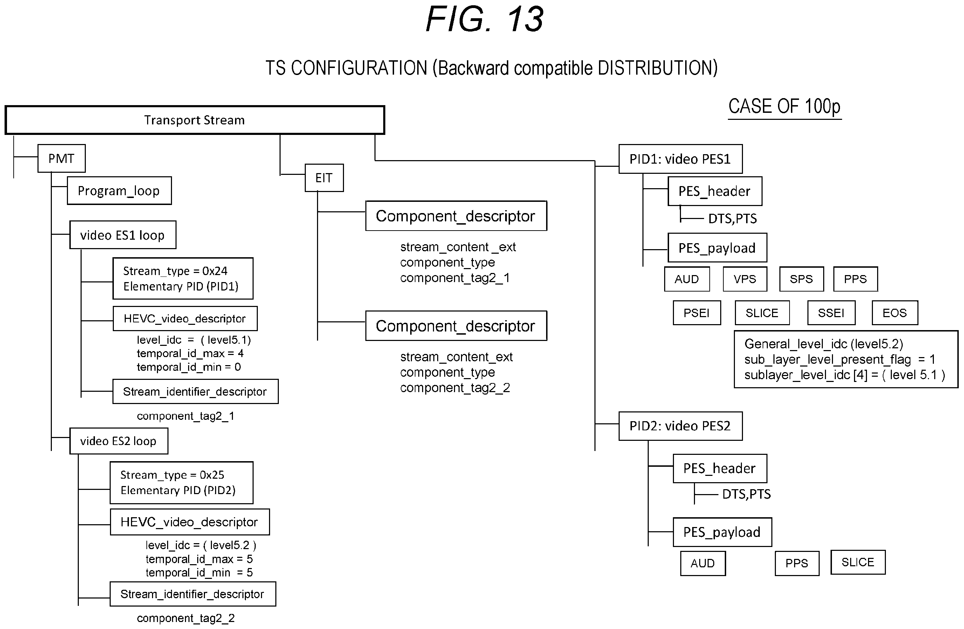

Fig. 13 illustrates a configuration example of the transport stream TS at the time of transmission of the 100 Hz program. In this configuration example, there are the PES packet "video PES1" of the base stream identified by PID1 and the PES packet "video PES2" of the enhanced stream identified by PID2. Here, PID1 is a fixed PID in the base stream, and PID2 is a fixed PID in the enhanced stream.

In the encoded image data of each picture of the base stream, NAL units exist such as the AUD, VPS, SPS, PPS, SLICE, and SEI. As described above, in the header of the NAL unit, the "nuh_temporal_id_plus1" is arranged meaning hierarchical layer identification information (temporal_id) of the picture.

Into the SPS, "general_level_idc" is inserted that is the level specification value of the video stream. Here, the "general_level_idc" is set to "level 5.2". Furthermore, in the SPS, pictures belonging to each hierarchical layer indicated by the "temporal_id" are bound as a sublayer (sub_layer), and "sublayer_level_presented_flag" is set to "1", whereby "sublayer_level_idc" is inserted that is the level specification value of the bit rate of each sublayer. Here, "sublayer_level_idc [4]" is set to "level 5.1".

On the other hand, in the encoded image data of each picture of the enhanced stream, NAL units exist such as the AUD, PPS, and SLICE. In the header of the NAL unit, the "nuh_temporal_id_plus1" is arranged meaning hierarchical layer identification information (temporal_id) of the picture.

Furthermore, the transport stream TS includes the Program Map Table (PMT) as Program Specific Information (PSI). The PSI is information indicating a program to which each elementary stream included in the transport stream belongs. In the PMT, a program loop (Program loop) exists describing information related to the entire program. Furthermore, in the PMT, an ES loop exists having information related to each elementary stream. In this configuration example, there are the video ES loop (video ES1 loop) corresponding to the base stream (video PES1) and the video ES loop (video ES2 loop) corresponding to the enhanced stream (video PES2).

In the video ES loop (video ES1 loop), information is arranged, such as a stream type and a packet identifier (PID), in correspondence with the base stream (video PES1), and a descriptor is also arranged describing information related to the video stream. A value of the "Stream_type" of the base stream is set to "0x24," and the PID information indicates PID1 given to the base stream PES packet "video PES1" as described above.

Furthermore, the HEVC VIDEO descriptor (HEVC descriptor) and the stream identifier descriptor (Stream_identifier_descriptor) are inserted into the video ES loop (video ES1 loop). In the HEVC VIDEO descriptor, the "level_idc" is set to "level 5.1". Furthermore, the "temporal_id_min" is set to "0" and the "temporal_id_max" is set to "4". The stream identifier descriptor associates the HEVC VIDEO descriptor and the component descriptor (component_descriptor) under the EIT with each other by the component tag "Component_tag1".

In the video ES loop (video ES2 loop), information is arranged, such as a stream type and a packet identifier (PID), in correspondence with the enhanced stream (video PES2), and a descriptor is also arranged describing information related to the video stream. A value of the "Stream_type" of the enhanced stream is set to "0x25," and the PID information indicates PID2 given to the enhanced stream PES packet "video PES2" as described above.

Furthermore, the HEVC VIDEO descriptor (HEVC descriptor) and the stream identifier descriptor (Stream_identifier_descriptor) are inserted into the video ES loop (video ES2 loop). In the HEVC VIDEO descriptor, the "level_idc" is set to "level 5.2". Furthermore, the "temporal_id_min" is set to "5", and the "temporal_id_max" is set to "5". The stream identifier descriptor associates the HEVC VIDEO descriptor and the component descriptor (component_descriptor) under the EIT with each other by the component tag "Component_tag2".

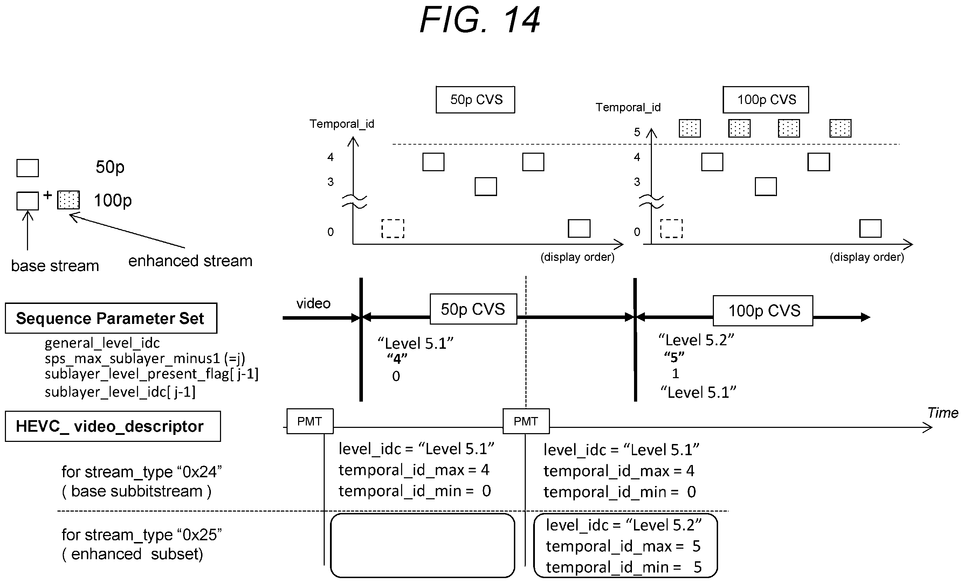

Fig. 14 illustrates an example of a state change of a conventional sequence parameter set and HEVC VIDEO descriptor comparably with the example of Fig. 11. In the conventional case, in the PMT corresponding to the 50 Hz program, only the HEVC VIDEO descriptor corresponding to the base stream exists, and there is no insertion of the HEVC VIDEO descriptor corresponding to the enhanced stream. From this point, in the conventional case, the HEVC VIDEO descriptor as the PMT descriptor is not fixedly inserted. Note that, the description content (element value) of each HEVC VIDEO descriptor is fixed.

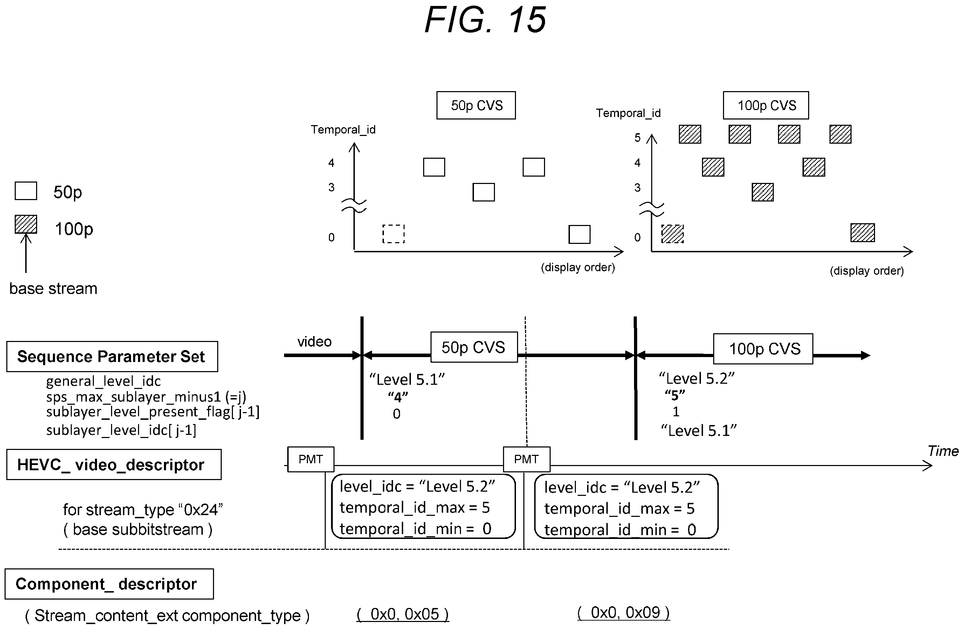

Fig. 15 illustrates an example of the state change of the sequence parameter set (Sequence Parameter Set (SPS)), the HEVC VIDEO descriptor (HEVC_video_descriptor), and the Component Descriptor (Component_descriptor) in a case where switching is performed from the 50 Hz program to the 100 Hz program in the distribution in the mode not having backward compatibility.

As the video stream of the 50 Hz program, only the base stream exists. The base stream includes the encoded image data of the pictures of all the hierarchical layers from 0 to 4. In this case, in the SPS of the base stream, the "general_level_idc" is set to "level 5.1" and the "sps_max_sublayer_minus1" is set to "4".

Also as the video stream of 100 Hz program, only the base stream exists. The base stream includes the encoded image data of the pictures of the hierarchical layers from 0 to 5. In this case, in the SPS of the base stream, the "general_level_idc" is set to "level 5.2" and the "sps_max_sublayer_minus1" is set to "5".

At the timing just before the transmission period of the 50 Hz program is started, the PMT corresponding to the 50 Hz program is inserted into the layer of the container. The HEVC VIDEO descriptor corresponding to the base stream is inserted into the PMT.

In the HEVC VIDEO descriptor corresponding to the base stream, although it corresponds to the 50 Hz program, similarly to the one corresponding to the 100 Hz program described later, the "level_idc" is set to "level 5.2", and moreover, the "temporal_id_min" is set to "0" and the "temporal_id_max" is set to "5". This is because in the present technology, the PMT descriptor is fixedly inserted and the values necessary for decoding described in the descriptor are fixed to the maximum scale values.

There is a component descriptor associated with the HEVC VIDEO descriptor corresponding to the base stream. In the component descriptor, the "stream_content_ext" is set to "0x0" and the "component_type" is set to "0x05", and existence is indicated of the single stream (base stream) of 50 Hz.

Similarly, in the transmission period of the 50 Hz program, at a timing just before the transmission period of the 100 Hz program is started, the PMT corresponding to the 100 Hz program is inserted into the layer of the container. The HEVC VIDEO descriptor corresponding to the base stream is inserted into the PMT. In the HEVC VIDEO descriptor corresponding to the base stream, the "level_idc" is set to "level 5.2", and moreover, the "temporal_id_min" is set to "0", and the "temporal_id_max" is set to "5".

There is a component descriptor associated with the HEVC VIDEO descriptor corresponding to the base stream. In the component descriptor, the "stream_content_ext" is set to "0x0" and the "component_type" is set to "0x09", and existence is indicated of the single stream (base stream) of 100 Hz.

As described above, in the present technology, the PMT descriptor (HEVC VIDEO descriptor) is fixedly inserted into the layer of the container. That is, the PMT descriptor corresponding to the 50 Hz program and the PMT descriptor corresponding to the 100 Hz program are set to be exactly the same state. Then, the values necessary for decoding described in the PMT descriptor are fixed to the maximum scale values.

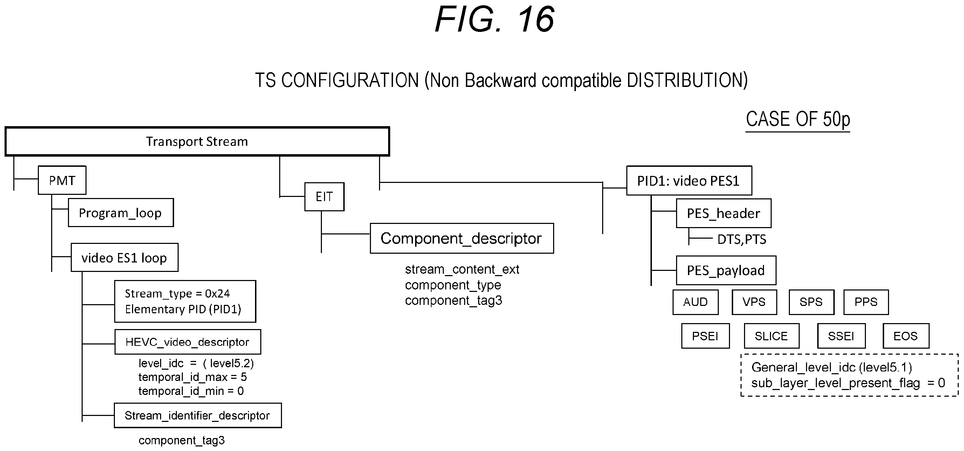

Fig. 16 illustrates a configuration example of the transport stream TS at the time of transmission of the 50 Hz program. In the configuration example, there is a base stream PES packet "video PES1" identified by PID1. Here, PID1 is a fixed PID in the base stream.

In the encoded image data of each picture of the base stream, NAL units exist such as the AUD, VPS, SPS, PPS, SLICE, and SEI. As described above, in the header of the NAL unit, the "nuh_temporal_id_plus1" is arranged meaning hierarchical layer identification information (temporal_id) of the picture. Into the SPS, "general_level_idc" is inserted that is the level specification value of the video stream. Here, the "general_level_idc" is set to "level 5.1".

Furthermore, the transport stream TS includes the Program Map Table (PMT) as Program Specific Information (PSI). The PSI is information indicating a program to which each elementary stream included in the transport stream belongs. In the PMT, a program loop (Program loop) exists describing information related to the entire program. Furthermore, in the PMT, an ES loop exists having information related to each elementary stream. In this configuration example, there is the video ES loop (video ES1 loop) corresponding to the base stream (video PES1) .

In the video ES loop (video ES1 loop), information is arranged, such as a stream type and a packet identifier (PID), in correspondence with the base stream (video PES1), and a descriptor is also arranged describing information related to the video stream. A value of the "Stream_type" of the base stream is set to "0x24," and the PID information indicates PID1 given to the base stream PES packet "video PES1" as described above.

Furthermore, the HEVC VIDEO descriptor (HEVC descriptor) and the stream identifier descriptor (Stream_identifier_descriptor) are inserted into the video ES loop (video ES1 loop). In the HEVC VIDEO descriptor, the "level_idc" is set to "level 5.2". Furthermore, the "temporal_id_min" is set to "0" and the "temporal_id_max" is set to "5". The stream identifier descriptor associates the HEVC VIDEO descriptor and the component descriptor (component_descriptor) under the EIT with each other by the component tag "Component_tag1".

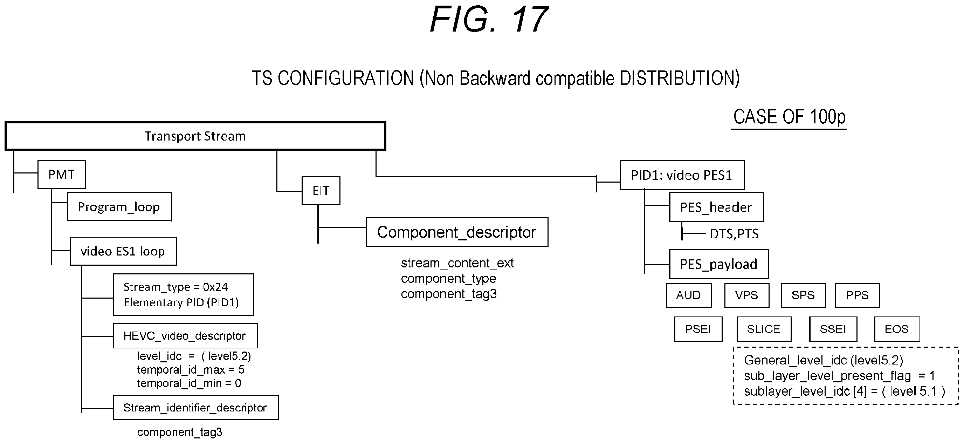

Fig. 17 illustrates a configuration example of the transport stream TS at the time of transmission of the 100 Hz program. In the configuration example, there is a base stream PES packet "video PES1" identified by PID1. Here, PID1 is a fixed PID in the base stream.

In the encoded image data of each picture of the base stream, NAL units exist such as the AUD, VPS, SPS, PPS, SLICE, and SEI. As described above, in the header of the NAL unit, the "nuh_temporal_id_plus1" is arranged meaning hierarchical layer identification information (temporal_id) of the picture.

Into the SPS, "general_level_idc" is inserted that is the level specification value of the video stream. Here, the "general_level_idc" is set to "level 5.2". Furthermore, in the SPS, pictures belonging to each hierarchical layer indicated by the "temporal_id" are bound as a sublayer (sub_layer), and "sublayer_level_presented_flag" is set to "1", whereby "sublayer_level_idc" is inserted that is the level specification value of the bit rate of each sublayer. Here, "sublayer_level_idc [4]" is set to "level 5.1".

Furthermore, the transport stream TS includes the Program Map Table (PMT) as Program Specific Information (PSI). The PSI is information indicating a program to which each elementary stream included in the transport stream belongs. In the PMT, a program loop (Program loop) exists describing information related to the entire program. Furthermore, in the PMT, an ES loop exists having information related to each elementary stream. In this configuration example, there is the video ES loop (video ES1 loop) corresponding to the base stream (video PES1).

In the video ES loop (video ES1 loop), information is arranged, such as a stream type and a packet identifier (PID), in correspondence with the base stream (video PES1), and a descriptor is also arranged describing information related to the video stream. A value of the "Stream_type" of the base stream is set to "0x24," and the PID information indicates PID1 given to the base stream PES packet "video PES1" as described above.

Furthermore, the HEVC VIDEO descriptor (HEVC descriptor) and the stream identifier descriptor (Stream_identifier_descriptor) are inserted into the video ES loop (video ES1 loop). In the HEVC VIDEO descriptor, the "level_idc" is set to "level 5.2". Furthermore, the "temporal_id_min" is set to "0" and the "temporal_id_max" is set to "5". The stream identifier descriptor associates the HEVC VIDEO descriptor and the component descriptor (component_descriptor) under the EIT with each other by the component tag "Component_tag1".

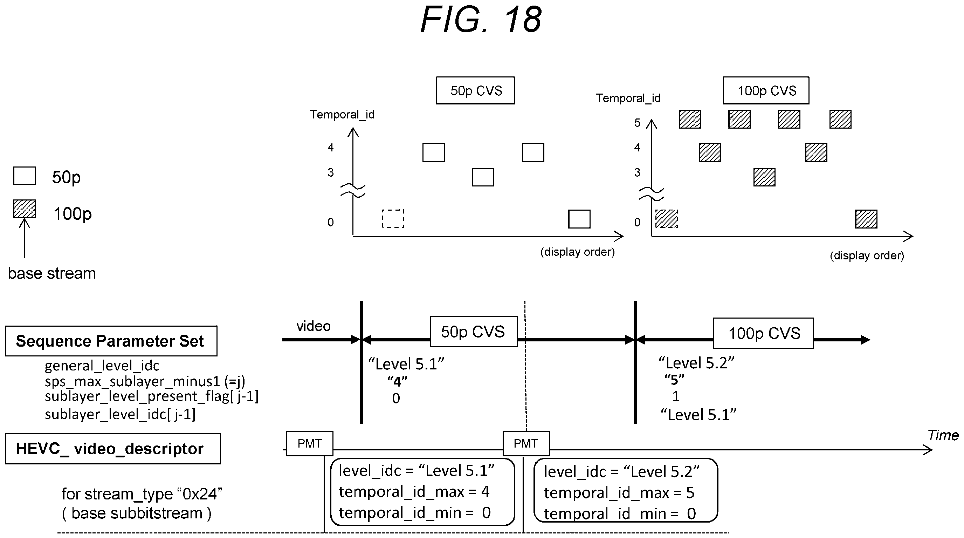

Fig. 18 illustrates an example of the state change of the conventional sequence parameter set and HEVC VIDEO descriptor comparably with the example of Fig. 15. The description content of the HEVC VIDEO descriptor corresponding to the base stream corresponds to the description content of the SPS in the video stream of the 50 Hz program. In other words, the "level_idc" is set to "level 5.1". Furthermore, the "temporal_id_min" is set to "0" and the "temporal_id_max" is set to "4". From this point, in the conventional case, with respect to the description content (element value) of the HEVC VIDEO descriptor as the PMT descriptor, the values necessary for decoding are not fixed to the maximum scale values.

### "Configuration of Reception Device"

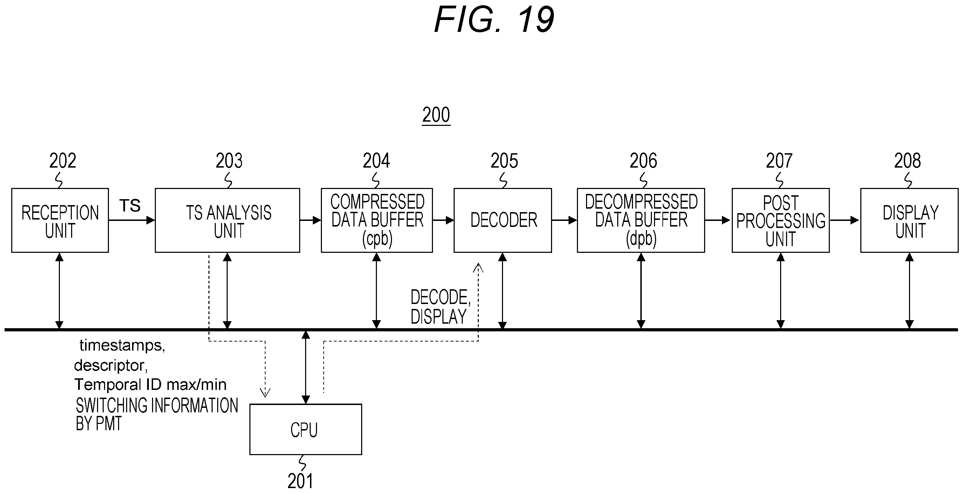

Fig. 19 illustrates a configuration example of the reception device 200. The reception device 200 includes a central processing unit (CPU) 201, a reception unit 202, a TS analysis unit (demultiplexer) 203, and a compressed data buffer (coded picture buffer (cpb)) 204. Furthermore, the reception device 200 includes a decoder 205, a decompressed data buffer (decoded picture buffer (dpb)) 206, a post processing unit 207, and a display unit 208. The CPU 201 constitutes a control unit and controls operation of each unit of the reception device 200.

The reception unit 202 receives the transport stream TS loaded on the broadcast wave or the network packet and transmitted from the transmission device 100. The TS analysis unit 203 filters and extracts streams constituting the video stream included in the transport stream TS by a PID filter, and sends the streams to the compressed data buffer (coded picture buffer (cpb)) 204.

In this case, fixed PIDs are given to the base stream and the enhanced stream, respectively. Therefore, it is not necessary to change the setting of the filter for extracting each stream even if the service is switched, for example, from the 50 Hz program (50p service) to the 100 Hz program (100p service) or vice versa, so that occurrence of display mute can be suppressed and seamless display becomes possible.

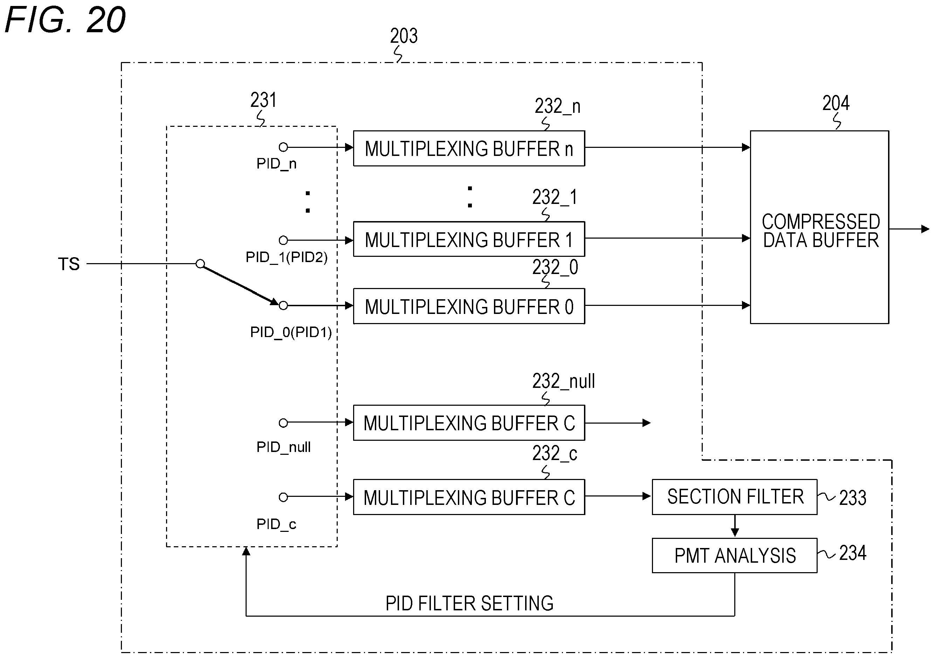

Fig. 20 illustrates a configuration example of the TS analysis unit 203. The TS analysis unit 203 includes a PID filter 231, multiplexing buffers 232_0 to 232_n, 232_null, and 232_c, a section filter 233, and a PMT analysis unit 234.

The PID filter 231 causes section data and a null packet included in the transport stream TS to pass on the basis of the PID. In the illustrated example, a PID value of the section data is PID_c, and a PID of the null packet is PID_null. The null packet does not have its own PID value and may be transmitted to be inserted into the stream of the PID of the video. Thus, detection is possible of the null packet in the multiplexing buffer of a receiver and can be used for determining that switching occurs.

Furthermore, the PID filter 231 causes a TS packet to pass on the basis of the set PID value, the TS packet corresponding to a program number corresponding to a broadcast service channel included in the transport stream TS. In the illustrated example, the PID values of the TS packet that can be set are PID_0 to PID_n.

The multiplexing buffers 232_0 to 232_n, 232_null, and 232_c temporarily store the TS packet, null packet, and section data that have passed through the PID filter 231, respectively. That is, in the TS analysis unit 203, the multiplexing buffer is managed for each PID value. The section filter 233 extracts the program map table (PMT) from the section data stored in the multiplexing buffer 232_c, on the basis of the PID value.

The PMT analysis unit 234 analyzes the PMT extracted by the section filter 233 and sets the PID value of the TS packet to be caused to pass for the PID filter 231 on the basis of the analysis result.

For example, a case is considered of a program (event) in which only the single stream (base stream) of 50 Hz exists in the distribution in the mode having backward compatibility (see services 1 and 2 in Fig. 9). In this case, in both the reception device 200 that can only receive the 50p broadcast and the reception device 200 that can also receive the lOOp broadcast, as PID_0, "PID1" is set that is a fixed PID value given to the base stream. Note that, in the reception device 200 that can receive the lOOp broadcast, as PID_0, "PID1" may be set that is a fixed PID value given to the base stream, and as PID_1, "PID2" may be set that is a fixed PID value given to the enhanced stream.

Furthermore, for example, a case is considered where there are two video streams of the single stream (base stream) of 50 Hz and the enhanced stream for 100 Hz in combination with the base stream in the distribution in the mode having backward compatibility (see services 1 and 2 in Fig. 9). In this case, in the reception device 200 that can only receive the 50p broadcast, as PID_0, "PID1" is set that is a fixed PID value given to the base stream. Furthermore, in this case, in the reception device 200 that can also receive the lOOp broadcast, as PID_0, "PID1" is set that is a fixed PID value given to the base stream, and as PID_1, "PID2" is set that is a fixed PID value given to the enhanced stream.

Furthermore, for example, a case is considered of a program (event in which there is the single stream (base stream) of 50 Hz or 100 Hz in the distribution in the mode not having backward compatibility (see service 3 in Fig. 9). In this case, in the reception device 200 that can only receive the 50p broadcast, since it is out of the reception target, the PID value is not set for PID_0 and PID_1. Furthermore, in this case, in the reception device 200 that can also receive the lOOp broadcast, as PID_0, "PID1" is set that is a fixed PID value given to the base stream.

Here, program recognition by descriptor analysis in the PMT analysis unit 234 will be described. First, the distribution in the mode having backward compatibility will be described. The PMT analysis unit 234 identifies the information on the program (event) basis of the distribution stream from the "component_type" and "stream_type_ext" of the component descriptor.

The component descriptor is associated with the HEVC VIDEO descriptor of the PMT by the component tag (component_tag) via the stream identifier descriptor. Therefore, at the time of distribution of the 50 Hz program, the PMT analysis unit 234 recognizes that the "level_idc" = "level 5.1" and "temporal_id_max" = "4" in the HEVC VIDEO descriptor of "PID1" correspond to the "stream_content_ext" = "0x0" and "component_type" = "0x05" in the component descriptor, and the "level_idc" = "level 5.1" and "temporal_id_max" = "4" in the UHD 50 Hz distribution stream.

Furthermore, at the time of distribution of the 100 Hz program, the PMT analysis unit 234 recognizes that the "level_idc" = "level 5.1" and "temporal_id_max" = "4" in the HEVC VIDEO descriptor of PID1" correspond to the "stream_content_ext" = "0x0" and "component_type" = "0x05" in the component descriptor, and the "level_idc" = "level 5.1" and "temporal_id_max" = "4" in the UHD 50 Hz distribution stream.

At the same time, the PMT analysis unit 234 recognizes that the "level_idc" = "level 5.2" and "temporal_id_max" = "5" in the HEVC VIDEO descriptor of "PID2" correspond to the "stream_content_ext" = "0x1" and "component_type" = "0x09" in the component descriptor, and the "level_idc" = "level 5.2" and "temporal_id_max" = "5" in the UHD 100 Hz distribution stream.

In this case, at the same time, there are two component descriptors, whereby the PMT analysis unit 234 recognizes that the distribution of the program is distributed in two streams of a 50 Hz receiver compatibility mode.

Next, the distribution in the mode not having backward compatibility will be described. The PMT analysis unit 234 identifies the information on the program (event) basis of the distribution stream from the "component_type" and "stream_type_ext" of the component descriptor.

The component descriptor is associated with the HEVC VIDEO descriptor of the PMT by the component tag (component_tag) via the stream identifier descriptor. Therefore, at the time of distribution of the 50 Hz program, the PMT analysis unit 234 recognizes that the "level_idc" = "level 5.2" and "temporal_id_max" = "5" in the HEVC VIDEO descriptor of "PID1" correspond to the "stream_content_ext" = "0x0" and "component_type" = "0x05" in the component descriptor, and the "level_idc" = "level 5.1" and "temporal_id_max" = "4" in the UHD 50 Hz distribution stream.

Furthermore, at the time of distribution of the 100 Hz program, the PMT analysis unit 234 recognizes that the "level_idc" = "level 5.2" and "temporal_id_max" = "5" in the HEVC VIDEO descriptor of PID1" correspond to the "stream_content_ext" = "0x0" and "component_type" = "0x09" in the component descriptor, and the "level_idc" = "level 5.2" and "temporal_id_max" = "5" in the UHD 100 Hz distribution stream by one stream.

In this case, at the same time, there is one component descriptor, whereby the PMT analysis unit 234 recognizes that the distribution of the program is distributed in one stream of the 100 Hz receiver incompatible mode.

Referring back to Fig. 20, the TS analysis unit 203 transfers the TS packet stored for each PID value in the multiplexing buffers 232_0 to 232_n to the compressed data buffer 204. For example, in the case of the reception device 200 that can only receive the 50p broadcast in the distribution in the mode having backward compatibility (see services 1 and 2 in Fig. 9), the TS packet related to the base stream stored in the multiplexing buffer 232_0 is transferred to the compressed data buffer 204.

Furthermore, for example, in the case of the reception device 200 that can also receive the lOOp broadcast in the distribution in the mode having backward compatibility (see services 1 and 2 in Fig. 9), the TS packet related to the base stream stored in the multiplexing buffer 232_0 and the TS packet related to the enhanced stream stored in the multiplexing buffer 232_1 are transferred to the compressed data buffer 204.

Furthermore, in the case of the reception device 200 that can also receive the lOOp broadcast in the distribution in the mode not having backward compatibility (see service 3 in Fig. 9), the TS packet related to the base stream stored in the multiplexing buffer 232_0 is transferred to the compressed data buffer 204. Note that, in the case of the reception device 200 that can only receive the 50p broadcast in the distribution in the mode not having backward compatibility (see service 3 in Fig. 9), it is out of the reception target and there is no storage in the multiplexing buffer 232_0, and the TS packet is not transferred to the compressed data buffer 204.

Referring back to Fig. 19, the compressed data buffer (cpb) 204 temporarily stores the TS packet transferred from the TS analysis unit 203, and hence the encoded image data of each picture. The decoder 205 reads and decodes the encoded image data of each picture stored in the compressed data buffer 204 at the decoding timing given by a Decoding Time Stamp (DTS) of the picture, and outputs the decoded data to the decompressed data buffer (dpb) 206.

The decompressed data buffer (dpb) 206 temporarily stores the image data of each picture decoded by the decoder 205. The post processing unit 207 performs, on the image data of each picture sequentially read at a display timing given by a Presentation Time stamp (PTS) from the decompressed data buffer (dpb) 206, processing of adjusting the frame rate to display capability.

For example, when the frame rate of the image data of each decoded picture is 50 fps and the display capability is 100 fps, the post processing unit 207 performs interpolation processing on the image data of each decoded picture so that the time direction resolution is doubled, and sends the image data to the display unit 208 as image data of 100 fps. Note that, the post processing is not only conversion of the frame frequency, but, for example, in a case where a decoder output has the HD resolution, conversion to higher resolution is also performed by resolution conversion in post processing. In this case, in a case where the decoder output already has the UHD resolution, the resolution conversion is bypassed.

The display unit 208 includes, for example, a liquid crystal display (LCD), an organic electroluminescence (EL) panel, or the like. Note that, the display unit 208 may be an external device connected to the reception device 200.

Operation of the reception device 200 illustrated in Fig. 19 will be briefly described. In the reception unit 202, the transport stream TS is received loaded on the broadcast wave or the network packet and transmitted from the transmission device 100. The transport stream TS is sent to the TS analysis unit 203. In the TS analysis unit 203, the streams constituting the video stream included in the transport stream TS are filtered by the PID filter and extracted, and sent to the compressed data buffer (cpb) 204.

In this case, depending on whether it is the distribution in the mode having backward compatibility or the distribution in the mode not having backward compatibility, and depending on whether it is the reception device 200 that can only receive the 50p broadcast or the reception device 200 that can also receive the lOOp broadcast, the stream to be filtered is controlled.

In the present embodiment, the PMT descriptor (HEVC VIDEO descriptor) is fixedly inserted, and the values necessary for decoding described in the descriptor are fixed to the maximum scale values. However, by analysis of the component descriptor associated with the HEVC VIDEO descriptor by the component tag, recognition of the program is appropriately performed.

In the decoder 205, the encoded image data of each picture stored in the compressed data buffer 204 is decoded at the decoding timing of the picture, sent to the decompressed data buffer (dpb) 206, and temporarily stored. Then, the image data of each picture sequentially read at the display timing from the decompressed data buffer (dpb) 206 is sent to the post processing unit 207. In the post processing unit 207, interpolation or sub-sampling is performed on the image data of each picture for adjusting the frame rate to the display capability. The image data of each picture processed by the post processing unit 207 is supplied to the display unit 208, and a moving image is displayed.

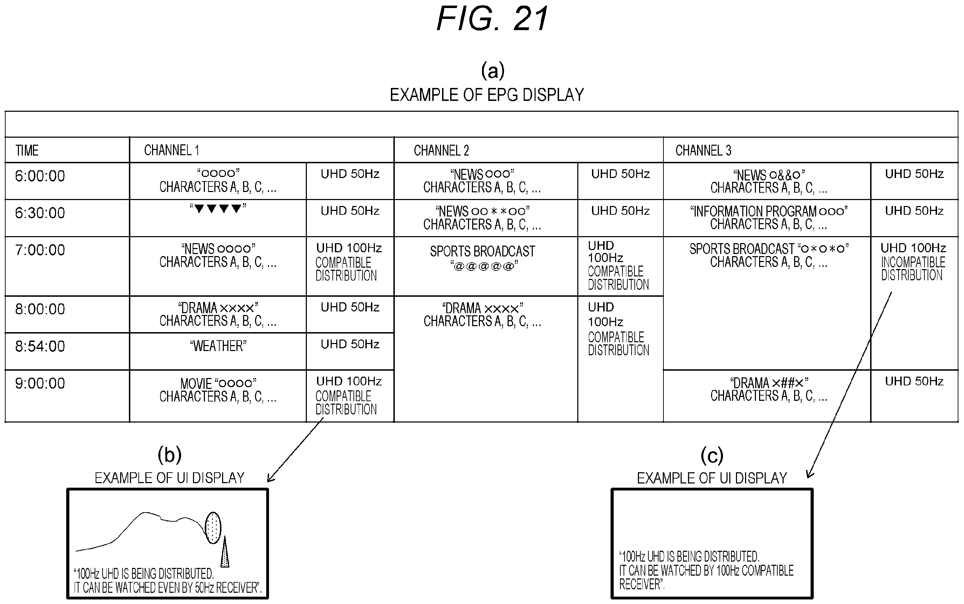

Fig. 21(a) illustrates an example of an EPG display performed on the basis of, for example, user operation in the reception device 200. Depending on the description content of the component descriptor corresponding to each program (event), the frame rate information and compatibility information of the program is written in the column of each program. For example, in the case of a program starting from 6:00:00 of channel 1 (service 1), "UHD 50 Hz" is written in the column of the program, and it can be seen that it is a 50 Hz program.

Furthermore, for example, in the case of a program starting from 9:00:00 of channel 1 (service 1), "UHD 100 Hz compatible distribution" is written in the column of the program, and it can be seen that it is a 100 Hz program but is a compatible distribution, and it can be seen that the program can be received by even the reception device 200 that can only receive the 50p broadcast. Fig. 21(b) illustrates an example of a UI display in a case where the program is selected by the reception device 200 that can only receive the 50p broadcast, for example.

Furthermore, for example, in the case of a program starting from 9:00:00 of channel 3 (service 3), "UHD 100 Hz incompatible distribution" is written in the column of the program, and it can be seen that it is a 100 Hz program and is incompatible distribution, and it can be seen that the program cannot be received by the reception device 200 that can only receive the 50p broadcast. Fig. 21(c) illustrates an example of the UI display in a case where the program is selected by the reception device 200 that can only receive the 50p broadcast, for example.

As described above, in the transmission/reception system 10 illustrated in Fig. 1, the PMT descriptor (HEVC VIDEO descriptor) in which the values necessary for decoding are described is fixedly inserted into the layer of the container, and the values necessary for decoding are fixed to the maximum scale values. Therefore, the operation on the transmission side becomes easy, and on the reception side, the maximum scale values of the values necessary for decoding can be easily recognized by the layer of the container.

Furthermore, in the transmission/reception system 10 illustrated in Fig. 1, a component descriptor in which frame rate information and compatibility information are described is inserted into the layer of the container in correspondence with the video stream for each of the events. Therefore, on the reception side, it is possible to combine the description contents of the HEVC VIDEO descriptor and the component descriptor to accurately determine the state of the received video stream and perform appropriate processing.

### <2. Modifications>

Note that, in the above embodiment, the transmission/reception system 10 including the transmission device 100 and the reception device 200 has been described; however, a configuration of the transmission/reception system to which the present technology can be applied is not limited thereto. For example, the reception device 200 may have, for example, a configuration of a set top box and a monitor connected together via a digital interface such as High-Definition Multimedia Interface (HDMI), or the like. Note that, "HDMI" is a registered trademark. Furthermore, an example has been described of identifying whether it is the base stream or the enhanced stream by the elements of the component descriptor at the time of compatible distribution, the values of the "component_type" and the "stream_content_ext"; however, this is not a limitation, and whether it is the base stream or the enhanced stream may be identified only by the value of the "component_type".

Furthermore, in the above embodiment, an example has been described in which the container is the transport stream (MPEG-2 TS). However, the present technology can also be applied similarly to a system with a configuration in which distribution to a reception terminal is performed using a network such as the Internet. In the distribution via the Internet, distribution is often performed with an MP4 or another format container. That is, examples of the container include containers of various formats such as a transport stream (MPEG-2 TS) adopted in the digital broadcasting standard, and MP4 used in the Internet distribution.

Furthermore, the present technology may also be embodied in the configurations described below.
(1) A transmission device including:
   an image encoding unit that performs hierarchical encoding of image data of each picture constituting moving image data and generates a video stream having encoded image data of a picture of each hierarchical layer; and
   a transmission unit that transmits a container of a predetermined format including the video stream, in which
   a descriptor in which values necessary for decoding are described is fixedly inserted into a layer of the container, and
   the values necessary for decoding are fixed to maximum scale values.
(2) The transmission device according to (1), in which
   the values necessary for decoding are a level specification value of the video stream, and maximum and minimum values of hierarchical layers of the encoded image data of each picture included in the video stream.
(3) The transmission device according to (1) or (2), in which
   the image encoding unit generates a first video stream by encoding moving image data of a first frame rate, and generates a second video stream by encoding moving image data of a second frame rate higher than the first frame rate, and
   the transmission unit transmits the container of the predetermined format continuously including the first video stream and the second video stream generated by the image encoding unit.
(4) The transmission device according to (3), in which
   the first video stream includes a base stream having encoded image data of pictures of all the hierarchical layers, and
   the second video stream includes a base stream having encoded image data of a picture on a low hierarchical layer side, and an enhanced stream having encoded image data of a picture on a high hierarchical layer side.
(5) The transmission device according to (4), in which
   a hierarchical layer of a picture included in the enhanced stream is set to a fixed hierarchical layer larger than a maximum hierarchical layer that can be taken by a picture of the base stream.
(6) The transmission device according to (3), in which
   the first video stream and the second video stream each include a base stream having encoded image data of pictures of all the hierarchical layers.
(7) The transmission device according to any of (1) to (6), in which
   the container is a transport stream,
   the descriptor is an HEVC VIDEO descriptor, and
   a component descriptor in which frame rate information and compatibility information are described is inserted into the layer of the container in correspondence with the video stream for each of programs.
(8) A transmission method including:
   an image encoding step, by an image encoding unit, of performing hierarchical encoding of image data of each picture constituting moving image data and generating a video stream having encoded image data of a picture of each hierarchical layer; and
   a transmission step, by a transmission unit, of transmitting a container of a predetermined format including the video stream, in which
   a descriptor in which values necessary for decoding are described is fixedly inserted into a layer of the container, and
   the values necessary for decoding are fixed to maximum scale values.
(9) A reception device including:
   a reception unit that receives a container of a predetermined format including a video stream having encoded image data of a picture of each hierarchical layer, the video stream being generated by hierarchical encoding of image data of each picture constituting moving image data, in which
   a descriptor in which values necessary for decoding are described is fixedly inserted into a layer of the container,
   the values necessary for decoding are fixed to maximum scale values, and
   a control unit is further included, the control unit controlling decoding processing of the video stream on the basis of a description content of the descriptor.
(10) The reception device according to (9), in which
   the container is a transport stream,
   the descriptor is an HEVC VIDEO descriptor,
   a component descriptor in which frame rate information and compatibility information are described is inserted into the layer of the container in correspondence with the video stream for each of programs, and
   the control unit controls the decoding processing of the video stream on the basis of a description content of the HEVC VIDEO descriptor and a description content of the component descriptor.
(11) The reception device according to (9) or (10), in which
   the container is a transport stream,
   the descriptor is an HEVC VIDEO descriptor,
   a component descriptor in which frame rate information and compatibility information are described is inserted into the layer of the container in correspondence with the video stream for each of programs, and
   the control unit performs control such that frame rate information and compatibility information of each program are written in a column of each program of an EPG display, on the basis of a description content of the component descriptor.
(12) The reception device according to any of (9) to (11), in which
   the container is a transport stream,
   the descriptor is an HEVC VIDEO descriptor,
   a component descriptor in which frame rate information and compatibility information are described is inserted into the layer of the container in correspondence with the video stream for each of programs, and
   the control unit performs control such that a UI display based on frame rate information and compatibility information of a predetermined program is performed when the predetermined program is selected.
(13) A reception method including
   a reception step, by a reception unit, of receiving a container of a predetermined format including a video stream having encoded image data of a picture of each hierarchical layer, the video stream being generated by hierarchical encoding of image data of each picture constituting moving image data, in which
   a descriptor in which values necessary for decoding are described is fixedly inserted into a layer of the container,
   the values necessary for decoding are fixed to maximum scale values, and
   a control step by a control unit is further included, the control step controlling decoding processing of the video stream on the basis of a description content of the descriptor.

The main feature of the present technology is that the PMT descriptor (HEVC VIDEO descriptor) in which the values necessary for decoding are described is fixedly inserted into the layer of the container, and the values necessary for decoding are fixed to the maximum scale values, whereby operation on the transmission side becomes easy and the maximum scale values of the values necessary for decoding can be easily recognized on the reception side (see Figs. 11 and 15).

### REFERENCE SIGNS LIST

- 10: Transmission/reception system
- 100: Transmission device
- 101: CPU
- 102: Encoder
- 103: Compressed data buffer (cpb)
- 104: TS formatter (multiplexer)
- 105: Transmission unit
- 200: Reception device
- 201: CPU
- 202: Reception unit
- 203: TS analysis unit (demultiplexer)
- 204: Compressed data buffer (cpb)
- 205: Decoder
- 206: Decompressed data buffer (dpb)
- 207: Post processing unit
- 208: Display unit
- 231: PID filter
- 232_0 to 232_n, 232_null, 232_c: Multiplexing buffer
- 233: Section filter
- 234: PMT analysis unit

## Claims

1. A transmission device comprising:
an image encoding unit that performs hierarchical encoding of image data of each picture constituting moving image data and generates a video stream having encoded image data of a picture of each hierarchical layer; and
a transmission unit that transmits a container of a predetermined format including the video stream, wherein
a descriptor in which values necessary for decoding are described is fixedly inserted into a layer of the container, and
the values necessary for decoding are fixed to maximum scale values.

2. The transmission device according to claim 1, wherein
the values necessary for decoding are a level specification value of the video stream, and maximum and minimum values of hierarchical layers of the encoded image data of each picture included in the video stream.

3. The transmission device according to claim 1, wherein
the image encoding unit generates a first video stream by encoding moving image data of a first frame rate, and generates a second video stream by encoding moving image data of a second frame rate higher than the first frame rate, and
the transmission unit transmits the container of the predetermined format continuously including the first video stream and the second video stream generated by the image encoding unit.

4. The transmission device according to claim 3, wherein
the first video stream includes a base stream having encoded image data of pictures of all the hierarchical layers, and
the second video stream includes a base stream having encoded image data of a picture on a low hierarchical layer side, and an enhanced stream having encoded image data of a picture on a high hierarchical layer side.

5. The transmission device according to claim 4, wherein
a hierarchical layer of a picture included in the enhanced stream is set to a fixed hierarchical layer larger than a maximum hierarchical layer that can be taken by a picture of the base stream.

6. The transmission device according to claim 3, wherein
the first video stream and the second video stream each include a base stream having encoded image data of pictures of all the hierarchical layers.

7. The transmission device according to claim 1, wherein
the container is a transport stream,
the descriptor is an HEVC VIDEO descriptor, and
a component descriptor in which frame rate information and compatibility information are described is inserted into the layer of the container in correspondence with the video stream for each of programs.

8. A transmission method comprising:
an image encoding step, by an image encoding unit, of performing hierarchical encoding of image data of each picture constituting moving image data and generating a video stream having encoded image data of a picture of each hierarchical layer; and
a transmission step, by a transmission unit, of transmitting a container of a predetermined format including the video stream, wherein
a descriptor in which values necessary for decoding are described is fixedly inserted into a layer of the container, and
the values necessary for decoding are fixed to maximum scale values.

9. A reception device comprising:
a reception unit that receives a container of a predetermined format including a video stream having encoded image data of a picture of each hierarchical layer, the video stream being generated by hierarchical encoding of image data of each picture constituting moving image data, wherein
a descriptor in which values necessary for decoding are described is fixedly inserted into a layer of the container,
the values necessary for decoding are fixed to maximum scale values, and
a control unit is further included, the control unit controlling decoding processing of the video stream on the basis of a description content of the descriptor.

10. The reception device according to claim 9, wherein
the container is a transport stream,
the descriptor is an HEVC VIDEO descriptor,
a component descriptor in which frame rate information and compatibility information are described is inserted into the layer of the container in correspondence with the video stream for each of programs, and
the control unit controls the decoding processing of the video stream on the basis of a description content of the HEVC VIDEO descriptor and a description content of the component descriptor.

11. The reception device according to claim 9, wherein
the container is a transport stream,
the descriptor is an HEVC VIDEO descriptor,
a component descriptor in which frame rate information and compatibility information are described is inserted into the layer of the container in correspondence with the video stream for each of programs, and
the control unit performs control such that frame rate information and compatibility information of each program are written in a column of each program of an EPG display, on the basis of a description content of the component descriptor.

12. The reception device according to claim 9, wherein
the container is a transport stream,
the descriptor is an HEVC VIDEO descriptor,
a component descriptor in which frame rate information and compatibility information are described is inserted into the layer of the container in correspondence with the video stream for each of programs, and
the control unit performs control such that a UI display based on frame rate information and compatibility information of a predetermined program is performed when the predetermined program is selected.

13. A reception method comprising
a reception step, by a reception unit, of receiving a container of a predetermined format including a video stream having encoded image data of a picture of each hierarchical layer, the video stream being generated by hierarchical encoding of image data of each picture constituting moving image data, wherein
a descriptor in which values necessary for decoding are described is fixedly inserted into a layer of the container,
the values necessary for decoding are fixed to maximum scale values, and
a control step by a control unit is further included, the control step controlling decoding processing of the video stream on the basis of a description content of the descriptor.
